(19) Europäisches Patentamt
European Patent Office
Office européen des brevets

(11) EP 4 258 220 A1

(12) EUROPEAN PATENT APPLICATION

(43) Date of publication:
**11.10.2023 Bulletin 2023/41**

(21) Application number: **22305480.0**

(22) Date of filing: **07.04.2022**

(51) International Patent Classification (IPC):
***G06T 15/50*** ***(2011.01)*** ***G06T 19/00*** ***(2011.01)***

(52) Cooperative Patent Classification (CPC):
**G06T 19/20; G06T 15/506; G06T 19/006;**
G06T 2219/2012

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100000 (CN)**

(72) Inventors:
- **THOMAS, EMMANUEL**
  **Beijing (CN)**
- **ANDRIVON, PIERRE**
  **35340 LIFFRE (FR)**
- **LE LEANNEC, FABRICE**
  **35830 BETTON (FR)**
- **CHAMPEL, MARY-LUC**
  **35220 MARPIRE (FR)**

(74) Representative: **RVDB Rennes**
**44 rue Lariboisière**
**35235 Thorigné-Fouillard (FR)**

# (54) RENDERING OF AUGMENTED REALITY (AR) CONTENT

(57) The present application relates to a method (400) for performing AR content rendering, the method comprising: obtaining (410) virtual relighting effects based on virtual lighting information (DT6) representative of at least one virtual light source (SC2); obtaining (412) hybrid relighting effects based on the virtual lighting information (DT6) and based on physical lighting information (DT4) representative of at least one physical light source (SC1); and generating (408) an AR video picture (PR3) by aggregating a real-world scene relighted based on the virtual relighting effects (RL1) and at least one virtual object relighted based on the hybrid relighting effects (RL2). The AR video picture (PR3) may then be rendered.

400
DV1
Physical object OB1
Physical light source SC1
Real shadow SH1
Obtaining physical DT4 + virtual lighting information DT6
PR1
3D world coordinate system
402
Real shadow SH1
Virtual shadow SH2a
Physical object OB1
Physical light source SC1
Virtual light source SC2
DT4 + DT6
404
406
Relighting
Agreggation → PR2
PR3
3D information DT1 + PR1
408
Virtual shadow SH2c
RF1
RF2
Virtual object OB2
Virtual shadow SH2b
First relighting 410
Second relighting 412

Fig. 4

EP 4 258 220 A1

## Description

### FIELD

The present application generally relates to augmented reality (AR) and to devices and methods for rendering, or enabling rendering, of AR video pictures. Particularly, but not exclusively, the present application concerns lighting effects applied in AR video pictures and processing involved for enabling such lighting effects.

### BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

Augmented Reality (denominated hereafter "AR") might be defined as an experience where 3 dimensional (3D) information representative of virtual object(s) (the "Augmented" part) is overlaid on top of a video picture representative of a user (3D) perceived real-word environment (the "Reality" part). Visual AR information, resulting from the combination of the video picture and the virtual information, can be displayed by means of various well-known AR devices, such as AR glasses, headsets or mobile devices.

The game Pokemon GO™ may be considered as one of the first massive deployments of a consumer AR service (in 2016). Since then, plenty of AR services have been widely spread in various fields, such as tourism, education, healthcare, navigation systems, construction, retail, etc.

In order to support various AR functions or services, AR devices may comprise multiple sensors (cameras, trackers, gyro, accelerometer, depth sensor ...) and processing modules (codecs, vision engine, renderer...). For instance, according to 3GPP standardization committee working on AR services standardization and deployment over 5G, AR devices may be categorized in four types: "5G Standalone AR UE", "5G EDGe-Dependent AR UE", "5G Wireless Tethered AR UE" and "5G Wired Tethered AR UE" (XR over 5G presentation to VR-IF: https://www.vr-if.org/wp-content/uploads/VRIF-April-2021-Workshop-3GPP-SA4-presentation.pdf). Each AR device architecture may be adapted for a given use case or scenario as identified by 3GPP.

Although distribution technologies for carrying 3D-based video and models are investigated and being standardized for decades (H.264/MVC, H.265/MV-HEVC, 3D-HEVC, Google Draco, etc.), augmented, virtual and mixed reality (denoted respectively AR, VR and MR) are concepts only becoming mainstream nowadays with services and products on the market (AR glasses, headsets, etc.) thanks to different converging conditions. 5G is also seen as a principal vector for deploying XR-based (XR = AR/VR/MR) services in the consumer daily life. Maturity in 3D capture techniques was a strong supporter of this advent, especially those based on Point Cloud capture and Multiview plus depth.

A concept of AR technology is to insert visual (enhanced) information in a captured real-world environment. In particular, virtual objects may be inserted into a video picture of a real-world scene to obtain an AR video picture. To this end, lighting is a key aspect to provide a realistic experience to the user. Indeed, a virtual object overlaid on an environment with inappropriate lighting and shadows can break the immersion illusion: the object seems to float in the air or to not be actually part of the scene.

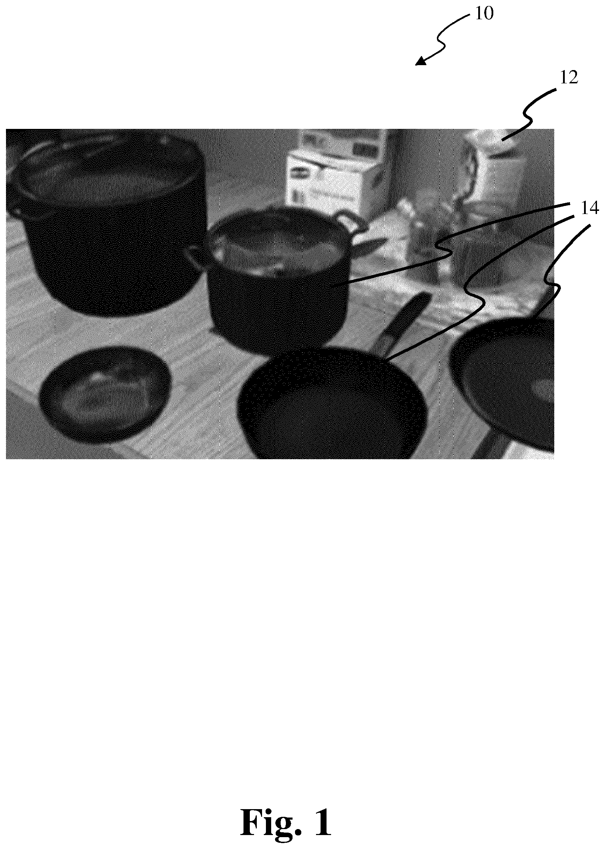

**Figure 1** shows for instance an AR video picture 10 obtained by inserting virtual objects 14 into a video picture 12 of a real-world scene. The virtual objects 14 may produce an undesirable impression of floating within their real-world surroundings, notably due to a poor lighting.

Proper relighting of the inserted virtual object is thus critical in order to provide an appropriate user experience. A non-relighted object lacking coherent shadows can break immersion and interest for commercial AR experiences.

Known methods of lighting estimation have been developed over the past few years for determining lighting information of the perceived or captured scene (in which the virtual object is inserted) so that specific effects can be added to the virtual object for a graceful and smooth integration in the real-world environment. With the advent of Artificial Intelligence, learning based methods have also emerged for this lighting estimation

However, a problem arises in that lighting estimation does not always provide optimal results and it is desirable to perform more efficient relighting of AR content to improve realism and thus the user experience.

Another problem resides in that lighting estimation is not always supported by AR devices, or supported in a limited non-satisfactory manner, that may conduct to unrealistic rendering effects. In particular, reaching smooth experience with real-time processing is a challenge for AR devices, especially those with limited power resources such as AR devices implemented as mobile devices, tablets, glasses or headsets. Lighting estimation algorithms may require powerful resources even for pre-trained deep learning-based solutions. Processing power embedded in handled devices can be limited, and battery may be drained very rapidly by computing intensive tasks (autonomy loss), e.g., decoding or 3D scene processing or rendering. Trade-off algorithms are thus implemented that can conduct to unrealistic effects detrimental to the user experience rather than enhancing the immersive scene. There is thus a need for realistic AR content, and in particular for proper relighting of AR video pictures to ensure good and immersive user experience. In particular, optimal rendering quality of AR content is desirable for all AR devices.

## SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method for performing AR content rendering, said method comprising:

- obtaining virtual relighting effects based on virtual lighting information representative of at least one virtual light source;
- obtaining hybrid relighting effects based on the virtual lighting information and based on physical lighting information representative of at least one physical light source; and
- generating an AR video picture by aggregating a real-world scene relighted based on the virtual relighting effects and at least one virtual object relighted based on the hybrid relighting effects ; and
- rendering said AR video picture.

In an exemplary embodiment, said generating of an AR video picture comprises:

- obtaining a relighted real-world scene by applying, based on a video picture representative of the real-world scene, said virtual relighting effects;
- obtaining at least one relighted virtual object by applying, based on 3-dimensional (3D) information representative of said at least one virtual object, said hybrid relighting effects; and
- aggregating the relighted real-world scene and the at least one relighted virtual object into the AR video picture.

In an exemplary embodiment, said at least one physical light source and said at least one virtual light source are defined by respectively the physical and virtual lighting information as ambient light sources and/or as punctual light sources of any one of the following types:

- directional light sources;
- point light sources; and
- spot light sources.

In an exemplary embodiment, the method further comprises:

- obtaining a scene description document comprising first lighting information associated with a first indicator;
- recognising, based on the first indicator, the first lighting information as the physical lighting information; and
- obtaining the virtual lighting information via an API of an AR content rendering application.

In an exemplary embodiment, the method further comprises:

- obtaining a scene description document comprising at least one of first lighting information associated with a first indicator and second lighting information associated with a second indicator;

wherein the method further comprises at least one of:

- determining, based on the first indicator, that the first lighting information is to be used as the physical lighting information; and
- determining, based on the second indicator, that the second lighting information is to be used as the virtual lighting information.

In an exemplary embodiment, the method further comprises:

- obtaining a scene description document comprising a descriptor; and
- accessing, based on the descriptor, the virtual and physical lighting information contained in a data stream.

In an exemplary embodiment, the method further comprises:

- detecting, based on at least one indicator comprised in a received bitstream, that the received bitstream carries, as metadata, said virtual and physical lighting information; and
- extracting said virtual and physical lighting information from the received bitstream.

In an exemplary embodiment, the method further comprises:

- obtaining 3D coordinates in association with the virtual and physical lighting information respectively; and
- determining, based on the 3D coordinates, spatial positions where the virtual and physical lighting information apply relative to the real-world scene;

wherein the virtual and hybrid relighting effects are determined based on the spatial positions of the virtual and physical lighting information.

According to a second aspect of the present application, there is provided a method for enabling AR content rendering, said method comprising:

- obtaining physical lighting information representative of at least one physical light source, by performing a first lighting estimation based on a video picture of a real-world scene;
- obtaining virtual lighting information representative of at least one virtual light source emitting virtual light in the real-world scene; and
- transmitting the physical and virtual lighting information for enabling AR rendering of an AR video picture.

In an exemplary embodiment, the physical and virtual lighting information are transmitted in a scene description document for enabling AR rendering of an AR video picture, said scene description document comprising at least one syntax element representative of the virtual and physical lighting information and at least one indicator indicating the presence of the virtual and/or physical lighting information within the scene description document.

According to a third aspect of the present application, there is provided a scene description document, formatted to comprise at least one syntax element representative of virtual and physical lighting information and at least one indicator indicating the presence of virtual and/or physical lighting information within the scene description document, as obtained from the method according to the second aspect of the present application.

According to a fourth aspect of the present application, there is provided an AR apparatus (or AR device) for AR content rendering. The AR apparatus comprises means for performing any one of the methods according to the first aspect of the present application.

According to a fifth aspect of the present application, there is provided a processing apparatus (or processing device) for enabling AR content rendering. The processing apparatus comprises means for performing any one of the methods according to the second aspect of the present application.

According to a sixth aspect of the present application, there is provided a computer program product including instructions which, when the program is executed by one or more processors, causes the one or more processors to carry out a method according to the first aspect of the present application.

According to a seventh aspect of the present application, there is provided a non-transitory storage medium (or storing medium) carrying instructions of program code for executing a method according to the first aspect of the present application.

According to an eighth aspect of the present application, there is provided a computer program product including instructions which, when the program is executed by one or more processors, causes the one or more processors to carry out a method according to the second aspect of the present application.

According to a nineth aspect of the present application, there is provided a non-transitory storage medium (or storing medium) carrying instructions of program code for executing a method according to the second aspect of the present application.

The application allows graceful and smooth integration of virtual objects into a video picture of a real-world scene, thereby providing realistic and immersive AR experience to the user. Efficient relighting of AR an AR video picture can be achieved, taking account of all possible, physical and virtual, sources of lights that may affect the various parts of the AR video picture, i.e., the parts representing the real-world scenes and virtual objects respectively.

Further, thanks to the present application, realistic and immersive AR content may be generated, irrespective of the resources available at the level of the AR device and/or for communication between the AR device and outside. Optimal rendering quality of AR content can thus be achieved, even by AR devices with limited processing resources, such as mobiles devices (AR googles, etc.). In particular, realistic lighting can be efficiently reconstructed in an AR video picture for the sake of realism. Accurate lighting estimation may for instance be achieved in real-time, without or with limited latency.

The specific nature of at least one of the exemplary embodiments as well as other objects, advantages, features and uses of said at least one of exemplary embodiments will become even more apparent from the following description of examples taken in conjunction with the accompanying drawings.

## BRIEF DESCRIPTION OF THE DRAWINGS

Reference will now be made, by way of example, to the accompanying drawings which show exemplary embodiments of the present application, and in which:

**Figure 1** shows an AR video picture generated in accordance with prior art;

**Figure 2** shows a schematic block diagram of steps of a method 100 of encoding a video picture in accordance with prior art;

**Figure 3** shows a schematic block diagram of steps of a method 200 of decoding a video picture in accordance with prior art;

**Figure 4** shows a method for rendering AR content according to an exemplary embodiment of the present application;

**Figure 5** shows a method for rendering AR content and a method for enabling AR content rendering, according to an exemplary embodiment of the present application;

**Figure 6** illustrates a real-world scene and a lighting estimation according to an exemplary embodiment of the present application;

**Figure 7** illustrates various components of lighting according to an exemplary embodiment of the present application;

**Figure 8A and 8B** show parts of a method for rendering AR content according to exemplary embodiments of the present application;

**Figure 9** shows an AR video picture obtained according to an exemplary embodiment of the present application;

**Figure 10** shows a schematic block diagram of an example of a system in which various aspects and exemplary embodiments are implemented; and

**Figure 11** shows a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspects relates to receiving/accessing a decoded bitstream.

At least one of the exemplary embodiments is described for encoding/decoding a video picture but extends to the encoding/decoding of video pictures (sequences of pictures) because each video picture may be sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en) but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. For instance, the number of samples comprised in a component may be the same as, or a multiple (or fraction) of, a number of pixels of a screen on which the video picture is intended to be display.

The number of samples comprised in a component may also be a multiple (or fraction) of a number of samples comprised in another component of a same video picture.

For example, in the case of a video format comprising a luma component and two chroma components like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

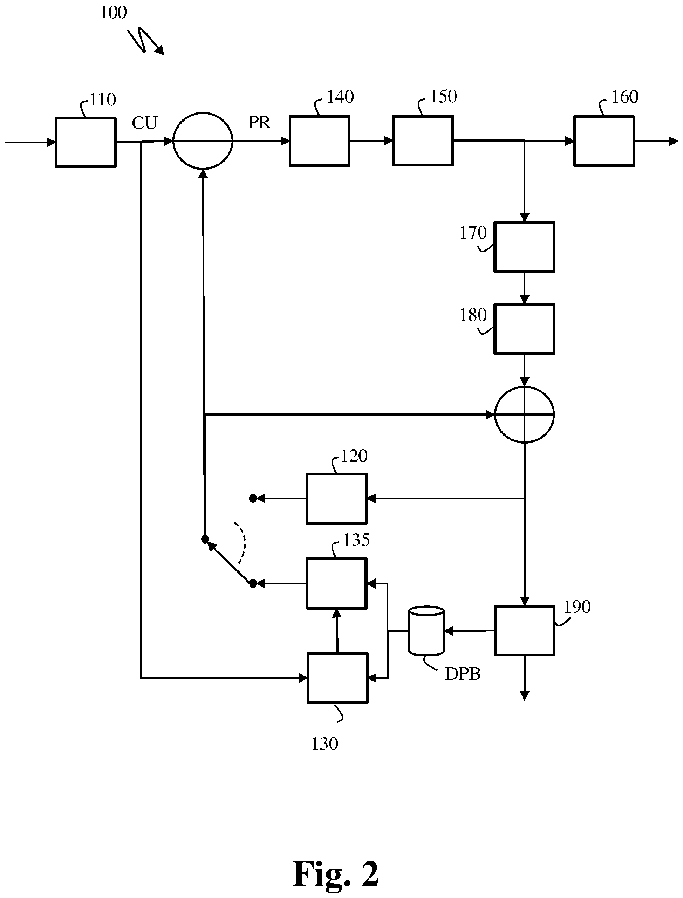

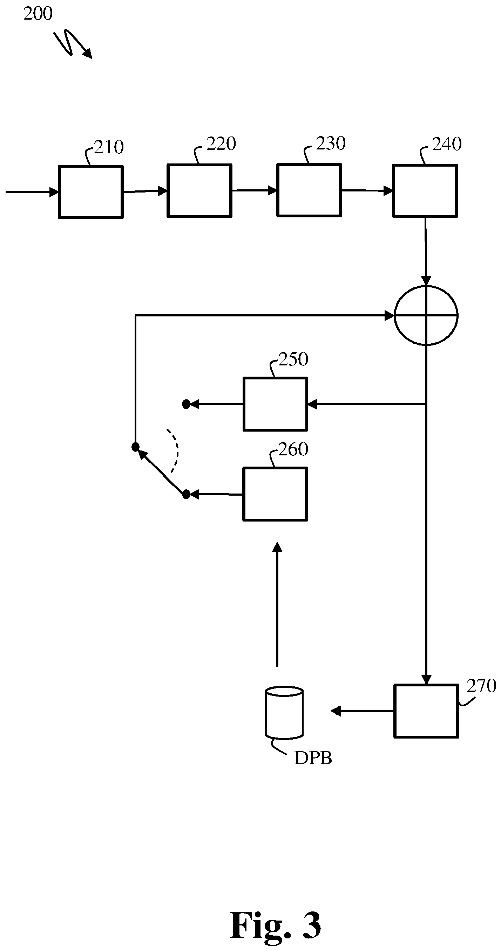

**Figures 2** and **3** provides an overview of video encoding/decoding methods used in current video standard compression systems like VVC for example. As indicated further below, these video encoding/decoding techniques, or any appropriate variants, may be used in the present application for the purpose of encoding/decoding. The present application is however not limited to these exemplary embodiments.

**Figure 2** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in an HEVC, a picture is divided into Coding Tree Units (CTU). Each CTU may be further subdivided using a quad-tree division, where each leaf of the quad-tree is denoted a Coding Unit (CU). The partitioning information data may then comprise data defining the CTUs and the quad-tree subdivision of each CTU.

Each block of samples (CU), in short a block, is then encoded within an encoding loop using either an intra or inter prediction coding mode. The qualification "in loop" may also be assigned hereinafter to steps, functions or the like which are implemented within the a loop, i.e. an encoding loop at the encoding stage or a decoding loop at the decoding stage.

Intra prediction (step 120) consists in predicting a current block by means of a predicted block based on already encoded, decoded and reconstructed samples located around the current block within the picture, typically on the top and on the left of the current block. Intra prediction is performed in the spatial domain.

In inter prediction mode, motion estimation (step 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is one or more motion vectors and reference picture index (or indices) associated to the current block. Next, motion compensation (step 135) obtains a predicted block by means of the motion vector(s) and reference picture index (indices) determined by the motion estimation step 130. Basically, the block belonging to a selected reference picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference picture to compute the predicted block samples.

Prediction information data is signaled in the bitstream. The prediction information may comprise a prediction mode, prediction information coding mode, intra prediction mode or motions vector(s) and reference picture index (or indices) and any other information used for obtaining a same predicted block at the decoding side.

The method 100 selects one of the intra mode or inter coding mode by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the best prediction mode is given as being the prediction mode of a best coding mode p* for a current block given by:

$$p^* = \underset{p \in P}{\mathrm{Argmin}}\{RD_{cost}(p)\} \qquad (1)$$

where P is the set of all candidate coding modes for the current block, p represents a candidate coding mode in that set, $RD_{cost}(p)$ is a rate-distortion cost of candidate coding mode p, typically expressed as:

$$RD_{cost(p)} = D(p) + \lambda . R(p) \ .$$

$D(p)$ is the distortion between the current block and a reconstructed block obtained after encoding/decoding the current block with the candidate coding mode $p$, $R(p)$ is a rate cost associated with the coding of the current block with coding mode $p$, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best predicted block from the current block. The prediction residual block PR is then transformed (step 140) by using, for example, a DCT (discrete cosine transform) or DST (Discrete Sinus transform) type transform or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the predicted block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 3** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded from the bitstream for decoding a current block of the video picture VP.

In step 220, a reconstructed picture is divided into current blocks based on the partitioning information. Each current block is entropy decoded from the bitstream within a decoding loop. Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks or the filtered reconstructed blocks form a reference picture that may be stored into a decoded picture buffer (DPB) as above discussed **(figure 1**).

Generally speaking, the present application relates to rendering of AR (augmented reality) content and to data processing for enabling rendering of AR content. An aspect of the application concerns an AR device for performing AR content rendering and a processing device for enabling AR content rendering, wherein the AR device and the processing device may cooperate with each other to achieve rendering of one or a plurality of AR video pictures. In exemplary embodiments, the AR device and the processing device form a same device.

As further described below, an AR video picture results from an aggregation of a real-world scene defined by a (source) video picture and at least one virtual object (or a virtual scene) defined by 3D information. In the present application, the real-world scene and the at least one virtual object which are aggregated are relighted (e.g., before or after the aggregation) based on respective lighting information to enhance the rendering of the obtained AR video picture. As will be seen, the present application allows relighting an AR video picture content to reflect (or render) physical and virtual light projected respectively by physical and virtual light sources within the AR video picture.

A physical light source is a light source from which emanates physical light, i.e., real light that affects the appearance of a real-world scene captured in a source video picture by means of any appropriate capturing sensor (e.g., camera or the like). Physical light really exists in the real-world scene and can be captured as part of the source video picture of the real-world scene.

A virtual light source is a light source from which emanates virtual light, i.e., artificially reconstructed light that does not physically exist in the real-world scene but which is incorporated into the AR video picture based on a processing of relighting by computing means. Virtual light is not captured as part of the source video picture of the real-world scene, it may originate from a virtual object (acting as a virtual light source) which is incorporated by aggregation into the AR video picture.

As described further below, both physical and virtual lights may be of various nature, such as punctual light and/or ambient light. The same applies for physical and virtual light sources. Various types of physical and virtual light sources are mentioned below in exemplary embodiments of the application.

A directional light source (or direction light) is a light source that act as though it is infinitely far away and emit light in the direction of the local -z axis. This light type inherits the orientation of the node that it belongs to; position and scale may be ignored except for their effect on the inherited node orientation. Because it is at an infinite distance, the light is not attenuated. Its intensity may be defined in lumens per meter squared, or lux (lm/m2).

A point light source (or point light) emits light in all directions from its position in space; rotation and scale may be ignored except for their effect on the inherited node position. The brightness of the light attenuates in a physically correct manner as distance increases from the light's position (i.e., brightness goes like the inverse square of the distance). Point light intensity may be defined in candela, which is lumens per square radian (lm/sr).

A spot light source (or spot light) emit light in a cone in the direction of the local -z axis. The angle and falloff of the cone may be defined using two numbers, referenced as "innerConeAngle" and "outerConeAngle". As with point lights, the brightness also attenuates in a physically correct manner as distance increases from the light's position (i.e., brightness goes like the inverse square of the distance). Spot light intensity refers to the brightness inside the innerConeAngle (and at the location of the light) and is defined in candela, which is lumens per square radian (lm/sr). Engines that don't support two angles for spotlights should use outerConeAngle as the spotlight angle (leaving innerConeAngle to implicitly be 0).

An aspect of the present application resides in relighting an AR video picture by taking into account both physical and virtual sources of light, to increase the realism and rendering quality of the AR video picture. To this end, an AR video picture may be generated by aggregating a real-world scene relighted based on virtual relighting effects and at least one virtual object relighted based on hybrid relighting effects. The virtual relighting effects may be obtained based on virtual lighting information representative of at least one virtual light source while the hybrid relighting effects may be obtained based on the above-mentioned virtual lighting information and based on physical lighting information representative of at least one physical light source.

In other words, an AR video picture may be generated based on a video picture (or source video picture) representative of the real-world scene and based on 3D information representative of at least one virtual object. The video picture of the real-world scene may be obtained or captured by any appropriate means. The 3D information may comprise volumetric information which spatially defines the at least one virtual object as a non-zero volume in space, although variants are possible where the 3D information defines a virtual object as point(s) or 2D object.

Further, relighting effects may be applied respectively to the real-world scene defined by the source video picture and to the at least one virtual object defined by the 3D information, prior or after aggregation. More specifically, virtual relighting effects may be applied to the real-world scene based on virtual lighting information representative of at least one virtual light source; and hybrid relighting effects may be applied to the at least one virtual object based on the virtual lighting information and based on physical lighting information representative of at least one physical light source. By aggregating the real-world scene relighted based on the virtual lighting effects and the at least one virtual object relighted based on the hybrid relighting effects, an AR video picture of improved quality can be obtained.

In an exemplary embodiment, there is provided a method for performing AR content rendering, said method comprising:

- obtaining virtual relighting effects based on virtual lighting information representative of at least one virtual light source;
- obtaining hybrid relighting effects based on the virtual lighting information and based on physical lighting information representative of at least one physical light source; and
- generating an AR video picture by aggregating a real-world scene relighted based on the virtual relighting effects and at least one virtual object relighted based on the hybrid relighting effects.

The generated AR video picture may then be rendered.

For instance, the generating step may comprise:

- obtaining a relighted real-world scene by applying, based on a video picture representative of the real-world scene, said virtual relighting effects;
- obtaining at least one relighted virtual object by applying, based on 3D information representative of said at least one virtual object, said hybrid relighting effects; and
- aggregating the relighted real-world scene and the at least one relighted virtual object into the AR video picture.

As indicated above, the virtual relighting effects and the hybrid relighting effects may be applied respectively to the real-world scene and to the at least one virtual object prior to the aggregation, i.e., prior to aggregating the relighted real-world scene and the relighted at least one virtual object.

In a variant, the virtual relighting effects and the hybrid relighting effects are applied respectively to the real-world scene and to the at least one virtual object while the real-world scene and said at least one virtual object are already aggregated into an aggregated video picture, i.e., after aggregation. In this variant, the virtual relighting effects are thus applied to the real-world scene within the aggregated video picture (i.e., to a first portion of the aggregated video picture representative of the real-world scene) based on the virtual lighting information; and hybrid relighting effects are applied to the at least one virtual object within the aggregated video picture (i.e., to a second portion of the aggregated video picture representative of the at least one virtual object) based on the physical and virtual lighting information.

An aspect of the application resides in obtaining physical and virtual lighting information for enabling AR content rendering. Physical lighting information may be obtained by performing a first lighting estimation based on a (source) video picture of a real-world scene. Virtual lighting information may be obtained by parsing virtual scene information, e.g. a scene description document or a file, describing the various element of a virtual scene including at least one virtual object, or by calling a programmatic function, e.g. an API, providing this virtual scene information. A virtual object may for instance be a virtual source of light from which emanates virtual light.

The physical and virtual lighting information may be obtained in different manners by an AR device in charge of AR content rendering. In an exemplary embodiment, the AR device performs itself the first and/or the second lighting estimation to determine the physical and/or the virtual lighting information. The AR device DV1 may for instance retrieve the physical and/or virtual lighting information from a local storage or receive the physical and/or virtual lighting information from outside the AR device (e.g., from an external processing device DV2). In an exemplary embodiment, the AR device DV1 performs a lighting estimation algorithm to determine physical lighting information representative of at least one physical light source in the real-world scene. The AR device DV1 may obtain and parse virtual scene information (e.g. in a scene description document or a file) to determine virtual lighting information.

In an exemplary embodiment, a lighting estimation is performed by a processing device external to the AR device, to determine the physical lighting information. The physical lighting information can then be transmitted, possibly along with virtual lighting information, to the AR device in any appropriate manner for enabling AR rendering, e.g. in a scene description document, in one or multiple files, or possibly in a bitstream of encoded video picture data.

In an exemplary embodiment, there is provided a method for enabling AR content rendering, said method comprising

- obtaining physical lighting information representative of at least one physical light source, by performing a lighting estimation based on a video picture of a real-world scene;
- obtaining virtual lighting information representative of at least one virtual light source; and
- transmitting the physical and virtual lighting information for enabling AR rendering of an AR video picture.

The application allows generation and rendering of a high-quality AR video picture based on an aggregation of a relighted real-world scene and at least one relighted virtual object (i.e., one or multiple virtual objects which are relighted) possibly in 3 dimensions (3D). An improved process of relighting, taking account of physical and virtual lights, can thus be achieved using lighting information of two different types, that is, physical lighting information representative of at least one physical light source and virtual lighting information representative of at least one virtual light source.

In other words, the application allows integrating both lighting information from a real-world scene (physical object(s)) and from a virtual scene (virtual object(s)) in order to achieve realistic relighting. In particular, thanks to the application, physical and virtual sources of lights can be differentiated and taken into account appropriately for relighting AR content.

More specifically, virtual light emitted by a virtual object (acting as a virtual source of light) may be identified based on virtual lighting information and taken into account for relighting the real-world part (real-world scene) defined by a source video picture and/or for relighting the virtual part (the at least one virtual object) defined by 3D information. For instance, light reflection and/or shadows produced by a virtual light can be incorporated into (overlaid on) the AR video picture. Such relighting effects can be applied to the real-world part of the AR video picture and/or to the virtual content (i.e., the at least one virtual object) of the AR video picture.

Further, physical light emitted by a physical light source may be identified based on physical lighting information and taken into account for relighting the virtual part (the at least one virtual object) of the AR video picture. In an exemplary embodiment, there is no need to relight the real-world part of the aggregated video based on the physical lighting information since the real-world part corresponds to the real-world scene which by definition already includes the physical light (captured as part of the source video picture). For instance, light reflection and/or shadows produced by a physical light can be incorporated into (overlaid on) the virtual content (i.e., the at least one virtual object) of the aggregated video picture.

Variants are however possible where physical relighting effects are also applied to the real-world scene based on the physical lighting information to alter (e.g., to cancel or reduce) the physical lighting emitted by one or more physical light sources in the real-world scene. This particular example allows cancelling, dimming or hiding physical light in the real-world scene which is aggregated into the AR video picture.

Graceful and smooth integration of virtual objects into a video picture of a real-world scene can thus be achieved, thereby providing realistic and immersive AR experience to the user.

As will be apparent in the exemplary embodiments below, various relighting effects can be achieved by implementing the present application.

The present application may further allow efficient relighting of AR content, irrespective of the resources available at the level of the AR device. Optimal rendering quality of AR content can thus be achieved, even by AR devices with limited processing resources, such as mobiles devices (AR googles, etc.). In particular, realistic lighting can be efficiently reconstructed in an AR video picture for the sake of realism. Accurate lighting estimation may for instance be achieved in real-time, with no or limited latency. In particular, partial processing delegation may be performed outside the AR device, that is, only part of the processing operations required for rendering the AR content may be delegated to an external processing device, including the lighting estimation for determining the physical lighting information. Other processing operations, such as aggregation of the relighted real-world scene and of the relighted at least one virtual object (as discussed above) may however be performed locally by the AR device to limit latency in communications between the AR device and the processing device and thus maximize AR rendering efficiency.

An optimal tradeoff may thus be achieved by this hybrid processing distribution between the AR device and a processing device to allow efficient and realistic AR content rendering even if the available bandwidth for communicating and the local resources in the AR device are limited.

Other aspects and advantages of the present application will be described below in particular exemplary embodiments, with reference to the figures.

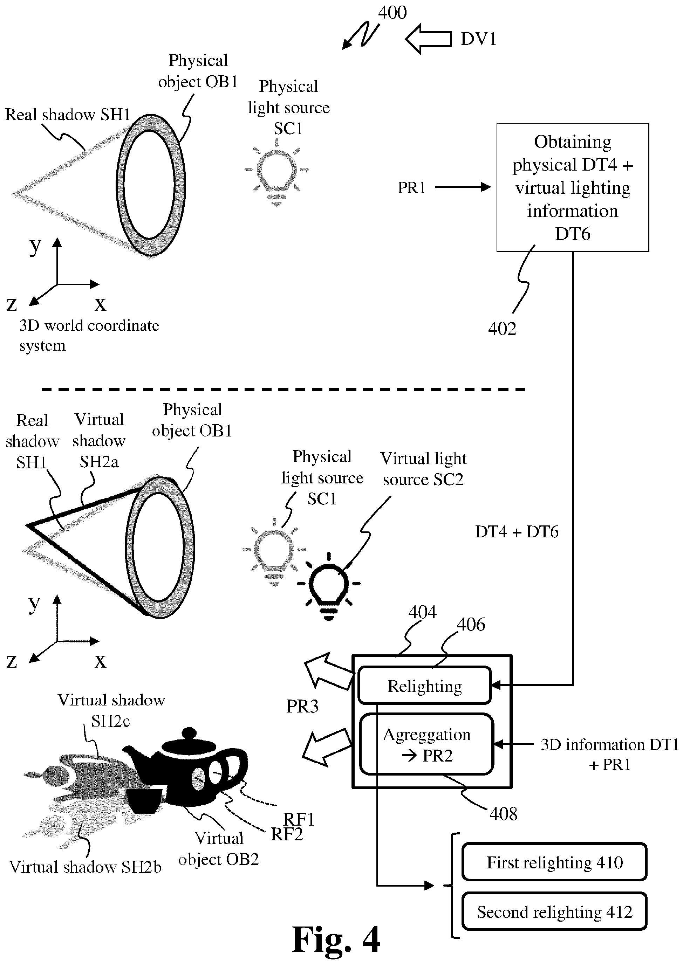

**Figure 4** shows a method 400 of AR content rendering according to an exemplary embodiment of the present application.

In the present exemplary embodiment, an AR video picture PR3 is generated and rendered. The AR video picture PR3 comprises a real-world part (first portion) representative of a real-world scene and a virtual part (second portion corresponding to the augmented part) representative of at least one virtual object OB2. Generation of the AR video picture PR3 is based on a source video picture (also called video picture) PR1 of the real-word scene and 3D information DT1 representative the virtual content (i.e., the at least one virtual object OB2).

The 3D information DT1 may comprise volumetric information which spatially defines the at least one virtual object as a non-zero volume, although variants are possible where the one or more virtual objects are defined as 3D points (i.e. having no volume and no surface per definition) and/or in 2 dimensions (i.e having no volume but a surface such as planes) by the 3D information DT1.

In the present example, the real-world scene comprises a physical (real) object OB1. Exemplary embodiments are possible with one or multiples physical objects OB1. As shown in **figure 4,** the real-world scene comprises physical light produced by a physical light source SC1 (which may, or may not, be part of the real-world scene). A physical shadow SH1 is present in the real-world scene as a result of the interaction of the physical object OB1 and the physical light emanating from the physical light source SC1. In other words, the physical shadow SH1 is produced by the physical projection of the physical light emitted by the physical light source SC1 onto the physical object OB1.

The configuration in terms of nature, form, number, arrangement, etc. of the physical and virtual objects integrated into the AR content, and of the physical and virtual light sources, may vary depending on each case.

The steps of the method 400 may be all performed by an AR device DV1 or may be performed by an AR device in cooperation with an external processing device, as described in exemplary embodiments further below.

More specifically, physical lighting information DT4 and virtual lighting information DT6 are obtained (402) by any appropriate manner. The physical lighting information DT4 is representative of (defines) at least one physical light source SC1 of the real-world scene. In other words, the physical lighting information DT4 defines physical light emitted in the real-world scene by at least one physical light source SC1.

Likewise, the virtual lighting information DT6 is representative of (defines) at least one virtual light source SC2, i.e., virtual light emitted by at least one virtual light source SC2. A virtual light source SC2 is a virtual object emitting virtual light, which can be of various nature. A virtual light source SC2 may be for instance a direct virtual light source (e.g., a virtual lamp, etc.) or an indirect virtual light source (reflection of physical and/or virtual light on a virtual object).

As will be apparent from exemplary embodiments further below, the nature and configuration of the physical and virtual sources of light (and thus of the resulting physical and virtual lights) may vary depending on each case. A physical light source and a virtual light source may both be of various types, such as a punctual light source and/or an ambient light source emitting respectively punctual and/or ambient light.

The physical lighting information DT4 may be obtained by performing a lighting estimation (402) based on the source video picture PR1 of the real-world scene.

The virtual lighting information DT6 may be obtained in any appropriate manner, for instance by parsing a data structure defining a virtual scene including at least one virtual object OB2. Typically, a 3D virtual scene may be structured in a graph of features including virtual light or virtual light source(s). This data structure may be of various types and may be obtained in different manners. For instance, a scene description document (or a file) SD1 defining a virtual scene including at least one virtual object OB2 may be obtained (e.g., retrieved from local storage or received from an external processing device DV2) and parsed to determine the virtual lighting information DT6.

In an exemplary embodiment, the AR device DV1 may receive the above-mentioned data structure from an external processing device DV2 via an API of an AR application run by the AR device DV1. For instance, the AR device DV1 may call a programmatic function (e.g., an API) to receive the scene description document (or file) SD1.

In an exemplary embodiment, the AR device DV1 receives physical lighting information DT4 and virtual lighting information DT6 in a bitstream of video picture data from an external processing device DV2.

Further, the AR video picture PR3 is generated (404) by relighting (406) the real-world scene (physical object OB1) defined by the source video picture PR1 and the at least one virtual object OB2 (i.e., the virtual scene) defined by the 3D information DT1, and by aggregating (408) the relighted real-world scene and the relighted at least one virtual object OB2.

More specifically, virtual relighting effects may be obtained based on the virtual lighting information DT6, these virtual relighting effects being representative of at least one virtual light source SC2. Hybrid relighting effects may also be obtained based on the virtual lighting information DT6 and based on the physical lighting information DT4 representative of at least one physical light source SC1. An AR video picture PR3 can then be generated by aggregating the real-world scene relighted based on the virtual relighting effects and the at least one virtual object relighted based on the hybrid relighting effects.

As already indicated, the virtual relighting effects and the hybrid relighting effects may be applied respectively to the real-world part and to the virtual part before the aggregation 408 (i.e., by relighting separately the physical object OB1 and the at least one virtual object OB2 prior to the aggregation, that is, independently of the aggregation) or after the aggregation 408 (i.e., by aggregating real-world scene defined by the source video picture PR1 and the at least one virtual object OB2 defined by the 3D information, and then by relighting both the real-world scene and the at least one virtual object OB2 within the aggregated video picture). In any case, the relighting 406 comprises a first relighting 410 where the virtual relighting effects are applied to the real-world scene (or to the source video picture PR1 defining the real-world scene) and a second relighting 412 where the hybrid relighting effects are applied to the at least one virtual object OB2 (or to the 3D information defining the at least one virtual object OB2).

As shown for instance in **figure 4,** the relighting 410 of the real-world scene of the AR video picture PR3 may comprise inserting (or generating) a virtual shadow SH2a in the real-world scene in association with a physical object OB1. This virtual shadow SH2a is representative of a virtual exposition of the physical object OB1 to virtual light emitted by a virtual light source such as SC2 in the present example.

As shown for instance in **figure 4,** the second relighting 412 of the virtual scene may comprise inserting (or generating) one or more virtual shadows and/or one or more light reflections in association with a virtual object OB2.

By way of an example, the following virtual shadows (any one or both) may be inserted into the AR video picture PR3: a virtual shadow SH2b representative of a virtual interaction of the virtual object OB2 with physical light emanating from the physical light source SC1 and/or a virtual shadow SH2c resulting from a virtual interaction of the virtual object OB2 with the virtual light emanating from the virtual light source SC2. The virtual shadow SH2b is representative of a virtual exposition of the virtual object OB2 to physical light emitted by the physical light source SC1 while the virtual shadow SH2c is representative of a virtual exposition of the virtual object OB2 to virtual light emitted by the virtual light source SC2.

In the present example, in the second lighting 412, the virtual shadow SH2b may be generated based on the physical lighting information DT4 while the virtual shadow SH2c may be generated based on the virtual lighting information DT6.

By way of an example, the following light reflections (any one or both) may be inserted into the AR video picture PR3: a light reflection RF1 on the virtual object OB2 representative of a virtual interaction of the virtual object OB2 with the physical light emitted by the physical light source SCC1; and/or a light reflection RF2 on the virtual object OB2 representative of a virtual interaction of the virtual object OB2 with the virtual light of the virtual light source SC2. For instance, a light reflection of a physical object (e.g., OB1) and/or a light reflection of another virtual object may be overlaid on a virtual object OB2 within the aggregated video picture PR2.

Various virtual and hybrid relighting effects may be applied in the present application, as will be apparent below in exemplary embodiments. The virtual relighting effects are applied to the real-world part of the aggregated video picture PR2 independently of (without taking account of) the physical lighting information DT4 since by definition the real-world scene within the aggregated video picture PR2 already includes the physical light, such as the one originating from the physical light source SC1 in the example of **figure 4.**

As described in more detail in exemplary embodiments below, the relighting effects applied respectively to the real-world scene and the virtual object(s) may be adapted depending on each case.

In an exemplary embodiment, physical relighting effects are also applied to the real-world scene (prior or after the aggregation 408) based on the physical lighting information DT4 to alter the physical lighting emitted by one or more physical light sources in the real-world scene. It is thus possible to cancel, dim, reduce or hide physical light in the real-world scene. This way, an excessive physical light can be reduced and possibly cancelled in the real-world part of an AR video picture PR3.

It should be noted that the application may apply in the same manner to one or a plurality of source video pictures PR1, to obtain and deliver one or a plurality of AR video pictures PR3. Further, the real-world scene represented by a source video picture PR1 may be of various nature and may comprise one or a plurality of physical objects OB1, with or without real shadow(s) SH1, or possibly may not comprise any physical object as such (for instance only a background). Likewise, an AR video picture PR3 may be obtained by aggregating a (source) video picture with 3D information representative of one or a plurality of virtual objects OB2 (also called 3D objects OB2).

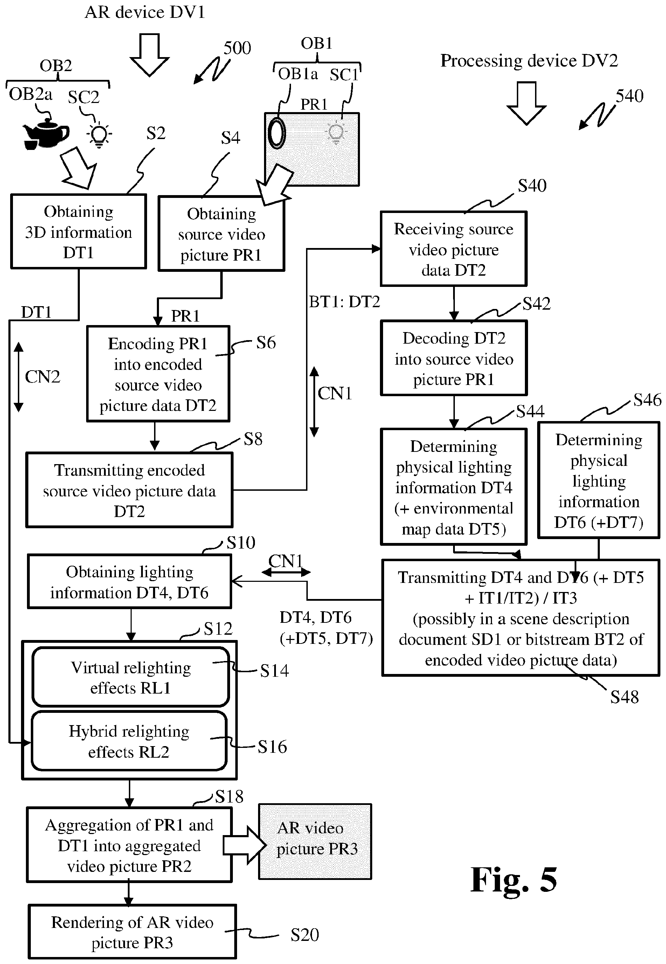

Particular exemplary embodiments of the present application will now be described with reference to **figures 5-11.** The exemplary embodiments described further below may be exemplary implementations of the particular embodiment of **figure 4.**

In the following exemplary embodiments, it is assumed that an AR video picture PR3 is obtained based on a source video picture PR1 (also called video picture PR1) of a real-world scene. The source video picture PR1 is representative of the real-world scene and may comprise one or more physical (real) objects OB1 of that scene. It should be appreciated, however, that the present application may apply in the same manner to a plurality of source video pictures PR1, for instance video pictures PR1 of a stream of video data. In particular, the following embodiments may apply for rendering AR video pictures as a video sequence.

In the following exemplary embodiments, the AR device DV1 may implement an API, for instance an API of an AR application for performing AR content rendering. This API may be an ARCore API, an ARKit (Apple®) API or WebXR API for instance.

**Figure 5** shows a schematic block diagram of steps S2-S20 of a method 500 implemented by an AR device DV1 for performing AR content rendering and steps S40-S48 of a method 540 implemented by a processing device DV2 for enabling AR content rendering.

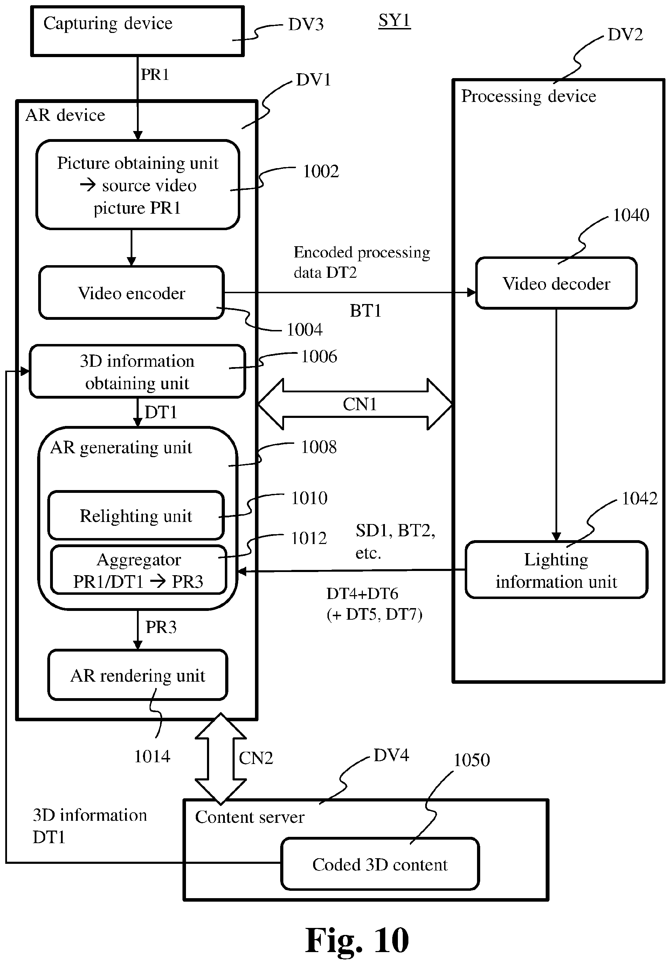

The AR device DV1 and processing device DV2 may take various forms as described further below. Exemplary implementations of AR device DV1 and processing device DV2 are described hereafter with respect to **figures 10-11.**

In the exemplary embodiment illustrated in **figures 5-9,** the AR device DV1 and processing device DV2 cooperate with each other for allowing AR content rendering. To this end, a communication channel CN1 may be established between the AR device DV1 and processing device DV2. In other words, the processing device DV2 may be configured as an external tethered device with respect to the AR device DV1.

It should be noted however that, although the AR device DV1 and the processing device DV2 are separate devices in the present case, variants are possible where the methods 500 and 540 are both performed by the AR device DV1. In other words, the AR devices DV1 and the processing device DV2 may form (or be part of) a same device. In particular, variants are possible where the AR device DV1 determines the physical lighting information DT4 and the virtual lighting information DT6 (S44, S46) as described further below. As further described below, it is possible in this variant to omit some of the steps of methods 500 and 540 (e.g., steps of encoding and decoding the various data and information, steps of transmitting/receiving between the AR device DV1 and the processing device DV2) since all the processing can be performed in the AR device DV1.

In an obtaining step S4 (**figure 5**), the AR device DV1 obtains a source video picture PR1 representative of a real-world scene (or real-world environment). The real-world scene may be of various nature depending on each case. The source video picture PR1 may be of any appropriate format.

The source video picture PR1 may be obtained for instance by capturing (S4) the real-world scene as the source video picture PR1 by means of at least one capturing sensor embedded (or comprised locally) in the AR device DV1. A camera may for instance be used to capture the video picture PR1. In a variant, the AR device DV1 may receive (S4) the source video picture PR1 from a capturing device DV3 which captures the real-world scene as the source video picture PR1, for instance by means of a camera or any other capturing sensor. In a variant, the AR device DV1 retrieves (S4) the source video picture PR1 from a local memory, i.e., a memory comprised in the AR device DV1.

As already indicated, the source video picture PR1 may represent one or a plurality of physical objects OB1, which may or may not be physical light sources. It is assumed in the exemplary embodiment of figure 5 that the real-world scene represented by the source video picture PR1 comprises physical objects OB1a and SC2, where SC2 designates a physical light sources. Variants are possible where physical light emitted by the physical light source SC1 is present in the real-world scene captured in the source video picture PR1 but the physical light source SC1 itself is not part of the real-world scene.

In an encoding step S6, the AR device DV1 encodes the source video picture PR1 of the real-world scene into encoded video picture data DT2. To this end, the AR device DV1 may use any appropriate encoding technique, such as an encoding method as described with reference to **figure 2** (method 100). As already mentioned, variants are possible without encoding and decoding steps.

In a transmitting step S8, the AR device DV1 transmits the encoded video picture data DT2 to the processing device DV2. In this example, the transmission S8 is made in the form of an encoded bitstream BT1, for instance through a communication channel (or communication link) CN1 which may be a 5G link or any other appropriate channel, using for instance a communication network. 5G provides for low latency communications.

In an exemplary embodiment, in the encoding step S6, the AR device DV1 also encodes spatial mapping information with the encoded video picture data DT2. In this case, the spatial mapping information is thus sent (S8) with the encoded video picture data DT2 to the processing device DV2. The spatial mapping information defines a 3D coordinate system and may be used so that the AR device DV1 and the processing device DV2 share the same 3D space coordinates system, thereby allowing consistent lighting estimation to be achieved.

In a receiving step S40, the processing device DV2 receives the encoded video picture data DT2. The processing device DV2 then obtains (S42) the source video picture PR1 by decoding the received encoded video picture data DT2. Decoding may be performed by any appropriate manner, for instance by a decoding method as previously described with reference to **figure 3** (method 200).

In an obtaining step S44, the processing device DV2 obtains physical lighting information DT4 by performing a lighting estimation based on the source video picture PR1. This lighting estimation S44 may be performed according to any known method, for instance by implementing a lighting estimation algorithm according to ARCore® (Google Play Services for AR) or ARKit®. For instance, a lighting estimator unit such as ARShadowGAN (Generative Adversarial Network for shadow generation), GLEAM (Ilumination Estimation Framework for Real-time Photorealistic Augmented Reality on Mobile Devices), DeepLight (light source estimation for augmented reality using deep learning), etc. may be used.

The physical lighting information DT4 obtained in S44 defines characteristics of physical light to which is exposed the real-world scene represented by the source video picture PR1. In other words, the physical lighting information DT4 characterizes physical light emanating from one or more physical light sources SC1 of the real-world scene. As shown in **figure 5,** it is assumed in the present exemplary embodiment that the physical lighting information DR4 defines a physical light source SC1 or physical light emitted by this physical light source SC1 within the real-world scene.

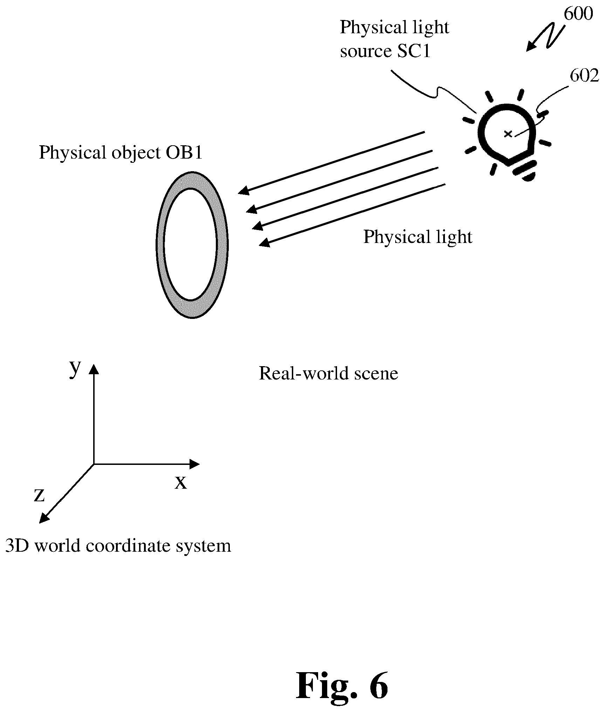

**Figure 6** is a schematic view representing the physical light source SC1, i.e., a light source existing in the real world, that projects light on a physical object OB1 present in the real-world scene captured by the source video picture PR1. By performing the first lighting estimation S44, it is thus possible to determine one or multiple characteristics of the physical light emanating from the physical light source SC1.

In an obtaining step S46 (**figure 5**), the processing device DV2 obtains virtual lighting information DT6 in any appropriate manner, for instance by parsing a data structure (e.g., a scene description document SD1, a file, a function from an API, or the like) describing a virtual scene (comprising virtual scene information). As described further below, the virtual scene may comprise at least one virtual object OB2.

In an exemplary embodiment, the physical lighting information DT4 defines at least one physical light source SC1 emitting physical light in the real-world scene.

In an exemplary embodiment, the virtual lighting information DT6 defines at least one virtual light source SC2 emitting virtual light in the real-world scene.

The physical lighting information DT4 and/or the virtual lighting information DT6 obtained respectively in S44 and S46 may both comprise at least one of the following light characteristics (or any combination thereof): lighting direction, lighting intensity, lighting position, color temperature, light spectrum and ambient spherical harmonics.

The physical lighting information DT4 and/or the virtual lighting information DT6 obtained respectively in S44 and S46 may both be determined based on the spatial mapping information received (if any) from the AR device DV1 as part of the encoded video picture data DT2. For instance, as shown in **Figure 6,** the lighting position 602 of a physical light source SC1 may be defined in 3D space coordinates (representative of the real-world scene), for instance using the 3D space coordinates defined by the spatial mapping information (if any) received (S40) from the AR device DV1.

Ambient spherical harmonics may represent spherical harmonics coefficients for ambient illumination.

For instance, the physical lighting information DT4 may define a main directional light representing the physical light source SC1 as a main light source in the real-world scene and ambient spherical harmonics representing the remaining ambient light energy in the real-world scene. Determining a main directional light may for instance be used to cast shadows, as described further below. Likewise, the virtual lighting information DT6 may define a main directional light representing a virtual light source SC2 as a second main light source corresponding to a virtual object OB2, and possibly ambient spherical harmonics representing ambient light energy.

In an exemplary embodiment, the one or more physical light sources SC1 and the one or more virtual light sources SC2 are defined by respectively the physical and virtual lighting information DT4, DT6 as ambient light sources and/or as punctual light sources of any one of the following types: directional light sources, point light sources, and spot light sources.

In an exemplary embodiment, in the lighting estimation step S44, the processing device DV2 also determines environmental map data DT5 based on the source video picture PR1. These environmental map data DT5 define as an image a 3D view of estimated physical light. Embodiments where such environmental map data are not used are also possible, however.

More specifically, the environmental map data DT5 define an environment map, i.e., a mapping image that represents an omnidirectional view of the physical environmental lighting of a 3D scene (the one represented in source video picture PR1) as seen from a particular 3D location. Every pixel in the mapping image corresponds to a 3D direction, and the data stored in the pixel represent the amount of light arriving from this direction. In 3D rendering applications, environmental maps may be used for image-based lighting techniques that approximate how objects are illuminated by their surroundings.

Environmental maps with enough dynamic range to represent even the brightest light sources in the environment are sometimes called "light probe images."

The environment map data DT5 may for instance represent the mapping image as a cubemap (or environmental cubemap, sometime also called HDR (high-dynamic range) cubemap), which is a way to encode 360-degree light information. In a cubemap, the environmental lighting is projected onto the six faces of an axis-aligned cube. The cube's faces are then arranged in a 2D image.

For instance, ARCore® (Google Play Services for AR) represents environment lighting using a cubemap. By using a cubemap, good performances for efficiently coding 360 video sequences can be achieved. However, any other 360 projections could be used such as equirectangular, fish-eye, cylindrical, etc. For instance, the environmental map can also be represented as "Latitude-Longitude Map" also known as equirectangular projection in 360 video domain.

The environmental map data DT5, taking the form cubemap or the like as described above, can be advantageously used to recreate realistic lighting effect on virtual objects. It can be used in particular to render reflections in shiny metallic objects in AR content, as described further below.

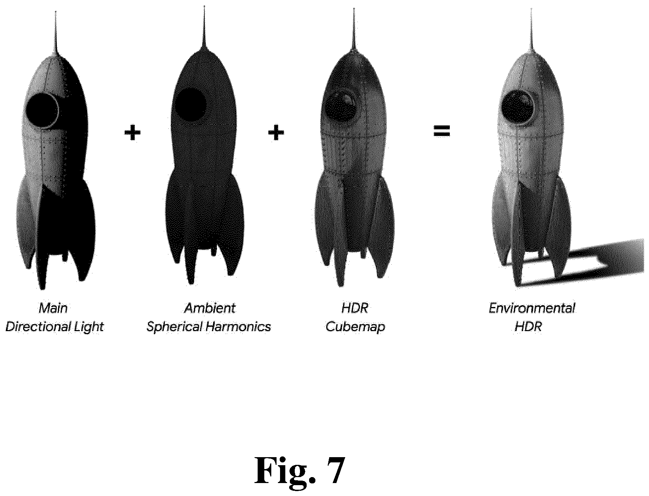

In an exemplary embodiment, the physical lighting information DT4 determined in S44 comprises a main directional light representing a physical light source SC1 as a main light source in the real-world scene, ambient spherical harmonics representing the remaining ambient light energy in the real-world scene and the environmental map data DT5 as previously described. **Figure 7** illustrate the effects of these three components in a particular example.

In a variant, environmental map data DT7, taking for instance the form of cubemap in an analogous manner to DT5, may also be determined based on the 3D information representative of at least one virtual object OB2. These environmental map DT7 data may define as an image a 3D view of estimated virtual light. Embodiments where such environmental map data DT7 are not used are also possible, however. These environmental map data DT7 can then be advantageously used to recreate realistic lighting effects in association with the real-world scene and/or the at least one virtual object OB2.

To maximize AR content rendering quality, the three above components may be refreshed (determined) by the processing device DV2 every time a new source video picture PR1 (or video frame) is provided by the AR device DV1. As a result, the light direction information and the ambient spherical harmonics may become a timed sequence of metadata and the environmental map data DT5 may become a timed sequence of textures, i.e., a video sequence.

In a transmitting step S48, the processing device DV2 transmits, to the AR device DV1, the physical lighting information DT4 and the virtual lighting information DT6 (with possibly also the environmental map data DT5 and/or DT7, if any), to enable AR content rendering. This transmission S48 may be performed for instance through the communication channel CN1 established between the AR device DV1 and the processing device DV2 (e.g., via a 5G link).

In a receiving step S10, the AR device DV1 receives the physical and virtual lighting information DT4, DT6, with possibly also the environmental map data DT5 and/or DT7 (if any).

Transmission S48 of the physical and virtual lighting information DT4, DT6 to the AR device DV1 may be performed in various manners, some exemplary embodiments being provided herebelow.

In an exemplary embodiment, the physical and virtual lighting information DT4, DT6 (with possibly also the environmental map data DT5 and/or DT7, if any) are transmitted to (S48), and so received by (S14), the AR device DV1 in a scene description document (or in one or more files) SD1. The physical and virtual lighting information DT4, DT6 may for instance be received via a Content Delivery Network (CDN) using the HTTP protocol or any other appropriate protocol. In a particular example, a scene description document SD1 comprising the physical and virtual lighting information DT4, DT6 is encapsulated into a file format structure, e.g., the ISO Base Media File Format structure, and retrieved by the AR device DV1 via the HTTP protocol.

The AR device DV1 may thus parse the received scene description document (or file(s)) SD1 to obtain the physical and virtual lighting information DT4, DT6.

Although it is not mandatory, the physical and virtual lighting information DT4, DT6 may be transmitted (S48) in an encoded (or compressed form). In this case, the AR device AR1 may decode (e.g., perform video decompression) to obtain the physical and virtual lighting information DT4, DT6. Decoding may be performed in any appropriate manner, for instance according to a decoding method as previously described with reference to **figure 3** (method 200).

In an exemplary embodiment, the transmission S48 is made as a bitstream BT2 of encoded video picture data comprising the physical and virtual lighting information DT4, DT6, and possibly also the environmental map data DT5 and/or DT7 (if any), in an encoded form. Encoding may be performed by any appropriate manner, such as an encoding method as previously described with reference to **figure 2** (method 100).

In an exemplary embodiment, the processing device DV2 inserts (S48) the physical and virtual lighting information DT4, DT6 as metadata of the bitstream BT2 of encoded video picture data prior to the transmission S48 to the AR device DV1. For instance, the physical and virtual lighting information DT4, DT6 are carried as metadata in one or multiple SEI messages (supplemental enhancement information) of the bitstream BT2. Particular implementations for carrying the physical and virtual lighting information DT4, DT6 in the bitstream BT2 will be described further below.

In an exemplary embodiment, the environmental map data DT5 determined in S44 is also encoded (S46), as an encoded image, in the encoded bitstream BT2 of encoded video picture data prior to the transmission S48 to the AR device DV1.

Irrespective of the way the transmission S48 is performed (e.g., by means of a scene description document, one or more files, or in a bitstream of encoded video picture data), the processing device DV2 preferably does not return the source video picture PR1 to the AR device DV1 to avoid unnecessary data exchange and communication latency, since the AR device DV1 already possesses the source video picture PR1 (obtaining step S4). While waiting for reception of the physical and virtual lighting information DT4, DT6, the AR device DV1 may store the source video picture PR1 in a local memory (of said AR device DV1) for later retrieval.

In an exemplary embodiment, the AR device DV1 may obtain the physical and virtual lighting information DT4, DT6 (and possibly also the environmental map data DT5 and/or DT7) by decoding the bitstream BT2 of encoded video picture data received from the processing device DV2 (e.g., via communication channel CN1). Decoding may be performed in any appropriate manner, for instance according to a decoding method as previously described with reference to **figure 3** (method 200).

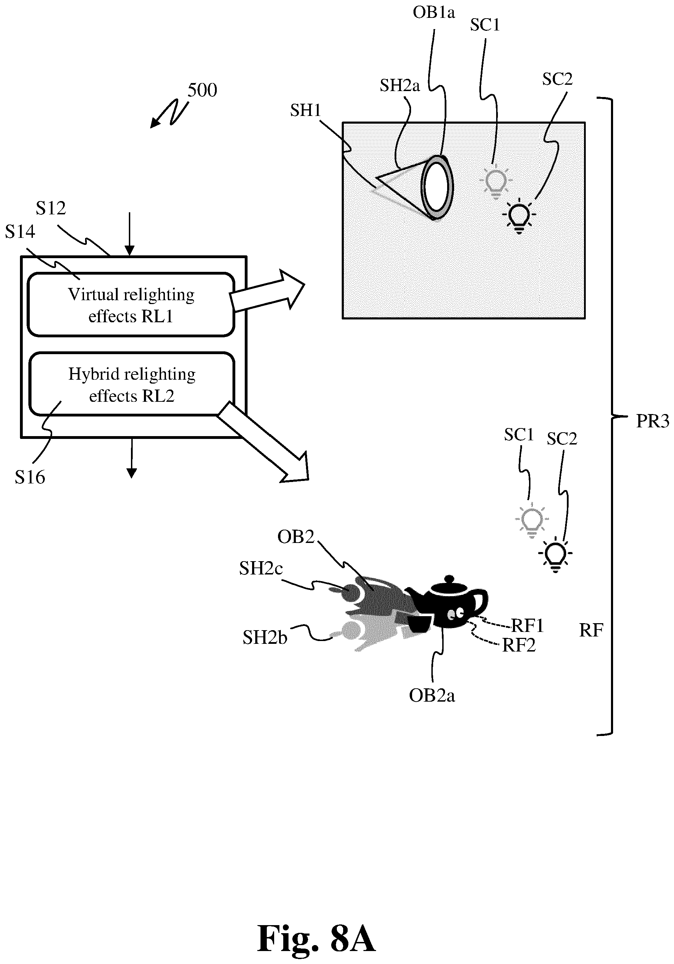

In a relighting step S12 as shown in **figures 5** and **8A,** the AR device DV1 relights (S14) the real-world scene (i.e., the physical object OB1) as defined by the source video picture PR1 and relights (S16) at least one virtual object OB2 (the virtual scene) as defined in 3D information DT1. As described further below, the real-world scene is relighted based on virtual relighting effects RL1 while the at least one virtual object OB2 is relighted based on hybrid relighting effects.

To this end, the AR device DV1 obtains (S2) the 3D information DT1 in any appropriate manner. The 3D information DT1 is representative of at least one virtual (or 3D) object OB2 which constitutes the virtual (or augmented) content that is to be aggregated with the real-world scene to generate AR content. Each virtual object OB2 may be defined in any appropriate 3D (or volumetric) format by the 3D information DT1.

The one or more virtual objects OB2 integrated into the source video picture PR1 may be of various natures, such as dynamic (or moving) objects, i.e., virtual objects that are defined by the 3D information DT1 as virtually moving within the real-world scene.

As already indicated, the 3D information DT1 may comprise volumetric information which spatially defines the one or more virtual objects as non-zero volumes (volumetric objects), although variants are possible where the one or more virtual objects are defined as 3D points (i.e. having no volume and no surface per definition) and/or in 2D (i.e having no volume but a surface such as planes) by the 3D information DT1.

As shown by way of an example in **figures 5 and 8A,** it is assumed in the present case that the 3D information DT1 defines two virtual objects OB2a and SC2 (noted collectively OB2). It is assumed that the virtual object SC2 is a virtual light source emitting virtual light in the real-world scene. The configuration in number, form, arrangement, etc. of the one or more virtual objects OB2 may of course be adapted. For instance, the 3D information DT1 may define a single virtual object OB2, such as the virtual light source SC2. It will be readily apparent to the skilled person based on the present disclosure how the exemplary embodiments can be adapted.

In an exemplary embodiment, the AR device DV1 receives (S2) the 3D information DT1 from a content server DV4 **(figure 10**) independently from (without) the physical and virtual lighting information DT4, DT6 (e.g., independently from the scene description document (or file) SD1 received from the processing device DV2), for instance via a second communication CN2 independent from the first communication channel CN1. The 3D information DT1 may for instance be received (S2) from a content server DV4 distinct from the processing device DV2.

In an exemplary embodiment, the AR device DV1 receives (S2) the 3D information DT1, together with the physical and virtual lighting information DT4, DT6 as part of the scene description document SD1, or file, or bitstream of encoded video picture data, received in S10 as described earlier. In this particular case, it is thus the processing device DV2 which transmits the 3D data DT1 to the AR device DV1.

In an exemplary embodiment, a content server DV4 transmits the 3D data DT1 to the processing device DV2 which then encodes the received 3D data DT1 together with the physical and virtual lighting information DT4, DT6 (with possibly also the environmental map data DT5, if any) into the bitstream BT2, prior to transmission to the AR device DV1. In this variant, the processing device DV2 serves thus as a relay to transfer the 3D information DT1 to the AR device DV1.

In an exemplary embodiment, the AR device DV1 retrieves (S2) the 3D information DT1 from a local memory of said AR device DV1.

More specifically, the relighting step S12 performed by the AR device DV1 (as shown in **figures 5** and **8A**) comprises a first relighting step S14 and a second relighting step S16, as described below. In the present exemplary embodiment, the virtual and hybrid relighting effects RL1, RL2 are applied separately to the real-world scene and to the at least one virtual object OB2 prior to aggregation into AR content, although variants are possible as already described.

In the first relighting step S14, virtual relighting effects RL1 are obtained (or determined) based on the virtual lighting information DT6, obtained in S10, which is representative of at least one virtual light source (e.g., SC2 in this example). The real-world scene defined by the source video picture PR1 is then relighted (S14) based on the virtual relighting effects RL1. For instance, the virtual relighting effects RL1 applied in S16 are associated with the physical object OB1a in the sense that they alter the lighting of the physical object OB1a itself and/or alter the lighting of another region of the aggregated video picture PR2, as a result of a virtual exposition of the physical object OB1a to virtual light (e.g., virtual light of the virtual light source SC2). The first relighting step S14 may possibly be also performed based on the environmental map data DT7 (if any).

In the second relighting step S16, hybrid relighting effects RL2 are obtained (or determined) based on the virtual lighting information DT6 obtained in S10 and based on the physical lighting information DT4, obtained in S10, which is representative of at least one physical light source (e.g., SC2 in this example). RL2 designates hybrid relighting effects in the sense that these effects take into account both physical and virtual lighting. The at least one virtual object OB2 defined by the 3D information DT1 is then relighted (S16) based on the hybrid relighting effects RL2.

The second relighting step S16 may possibly be also performed based on the environmental map data DT5 and/or DT7 (if any). For instance, the hybrid relighting effects RL2 applied in S16 are associated with the virtual object OB2a in the sense that they alter the lighting of the virtual object OB2a itself as a result of a virtual exposition of the virtual object OB2a to virtual light (e.g., virtual light of the virtual light source SC2).

Generally, the relighting effects RL1, RL2 applied in relighting steps S14, S16 are configured to alter the lighting of the real-world part and virtual part to provide a more immersive and realistic AR experience to the user. Both relighting steps S14 and S16 cause relighting effects (or reconstructed lighting) to be incorporated into, or overlaid on, the real-world scene and the virtual content, respectively. As a result, the relighted real-world scene and the relighted at least one virtual object OB2 produced respectively by the relighting steps S14, S16 comprise the relighting effects RL1, RL2. These relighting effects RL1, RL2 may be of various types and may comprise in particular at least one of (or any combination thereof): shadow effects; ambient lighting illumination; specular highlights; and light reflection.

In an exemplary embodiment, the first relighting step S14 may comprise any one of (or both): overlaying, on a physical object OB1 reconstructed lighting; and associating (or coupling) a physical object OB1 with shadow effects representative of at least one reconstructed shadow of the physical object OB1. These reconstructed lighting and shadow effects are determined based on the virtual lighting information DT6.

In an exemplary embodiment, the second relighting step S16 may comprise any one of (or both): overlaying reconstructed lighting on a virtual object OB2; and associating (or coupling) a virtual object OB2 with shadow effects representative of at least one reconstructed shadow of a virtual object OB2. These reconstructed lighting and shadow effects are determined based on the physical lighting information DT4 or virtual lighting information DT6 (or both).

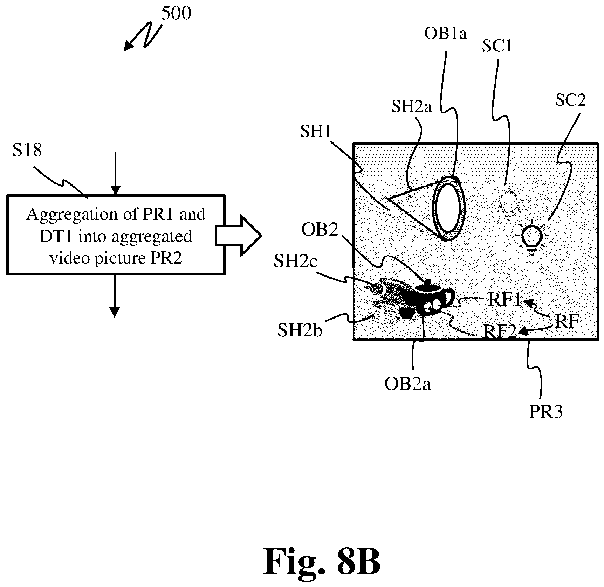

As shown for instance in **figure 8,** the virtual relighting effects RL1 applied in the first relighting step S14 may cause the relighted real-world scene to include a virtual shadow SH2a representative of a virtual interaction of the physical object OB1a with the virtual light emitted by the virtual light source SC2. In other words, a virtual shadow SH2a formed by virtual exposition of the physical object OB1a to the virtual light of the virtual light source SC2 is generated and incorporated into the relighted real-world scene.

In the present exemplary embodiment, the virtual relighting effects RL1 applied in the first relighting step S16 do not take into account the physical lighting information DT4 since by definition the physical light (such as the one emitted by SC1) is already present in the real-world scene defined by the source video picture PR1. In the present example, the physical shadow SH1 produced by the physical exposition of the physical object OB1 to the physical light of the physical light source SC1 is already represented in the source video picture PR1. As already described, variants are however possible where physical relighting effects based on the physical relighting information DT4 are also applied to the real-world scene, for instance to cancel, reduce or dim physical light present in the real-world scene (e.g., the physical light emitted by the physical light source SC1).

As shown for instance in **figure 8,** the hybrid relighting effects RL2 applied in the second relighting step S16 may lead to apply various relighting effects in association with the virtual object OB2a, such as virtual shadow(s) SH2 and/or virtual light reflection(s) RF.

More specifically, the hybrid relighting effects RL2 may generate virtual shadows such as any one of (or both):

- a virtual shadow SH2b representative of a virtual interaction of the virtual object OB2a with the physical light emitted by the physical light source SC1 is generated based on the physical lighting information DT4; and

- a virtual shadow SH2c representative of a virtual interaction of the virtual object OB2a with the virtual light emitted by the virtual light source SC2 is generated based on the virtual lighting information DT6.

In other words, virtual shadows SH2b and SH2c formed respectively by virtual exposition of the virtual object OB2a to the physical light of the physical source SC1 and to the virtual light of the virtual light source SC2 may be integrated into the aggregated video picture PR2.

Further, the hybrid relighting effects RL2 applied in the second relighting S16 may generate virtual light reflections RF, that is, any one of the following (or both):

- a virtual light reflection RF1 of the physical light from the physical light source SC1 on the virtual object OB2a; and

- a virtual light reflection RF2 of the virtual light from the virtual light source SC2 on the virtual object OB2a.

In an aggregation step S18 shown in **figures 5** and **8B,** the AR device DV1 generates an AR video picture PR3 by aggregating the real-world scene relighted in S14 based on the virtual relighting effects RL1 and the relighted at least one virtual object OB2 relighted in S16 based on the hybrid relighting effects RL2.

As a result of the two-step relighting S12, if a light source is virtual, the virtual light emitted by said light source may be incorporated (or rendered) in the real-world scene and on the one or more virtual objects OB2, within the AR video picture PR3. If a light source is real (i.e., a physical light source), the physical light emitted by said light source is for instance only incorporated (or rendered) on the one or more virtual objects OB2, within the AR video picture PR3.

In the present exemplary embodiment, the aggregation S18 causes the relighted virtual objects OB2 to be overlaid on (or integrated into) the relighted real-world scene, thereby producing the AR video picture PR3. The AR video picture PR3 thus comprises two parts (or portions): a real-world part (or first portion) representative of the relighted real-world scene and a virtual part (or second portion) representative of the relighted virtual object OB2. The virtual objects OB2 constitute augmented content which is overlaid on top of a user perceived real-word environment defined by the source video picture PR1.

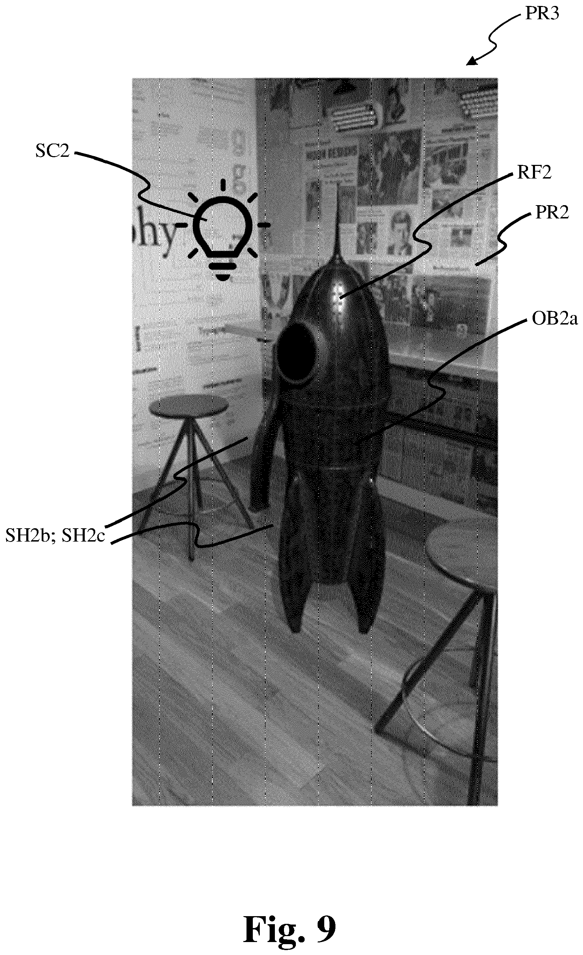

**Figure 9** illustrates generation of an AR video picture PR3 according to an exemplary embodiment, where virtual objects OB2a (a rocket) and SC2 (a light bulb) are inserted into a source video picture PR1. In the second relighting step S18 (**figure 5**), a virtual light reflection RF2 of virtual light emitted from the virtual light source SC2 is overlaid on the virtual object OB2a within the aggregated video picture PR2, said virtual light reflection RF2 being determined based on the virtual lighting information DT6.

Still with reference to **figure 5**, in a rendering step S20, the AR device DV1 may render the AR video picture PR3 generated in S18 by any appropriate means. The rendering may be performed by displaying the AR video picture PR3 (or by using any 3D projection or the like). In an exemplary embodiment, the AR device DV1 displays the AR video picture PR3 using a local display unit embedded in the AR device DV1. The display unit may take any appropriate form, such as AR google, headset for rendering AR content, a screen, etc.

The AR device DV1 may perform any appropriate computing for rendering the AR video picture PR3 as an AR content. In an exemplary embodiment, the AR device DV1 may send the AR video picture PR3 to an external display unit for displaying.

As already indicated, the AR device DV1 and the processing device DV2 are separate devices in the exemplary embodiment depicted in **figure 5**. In an exemplary embodiment, the methods 500 and 540 are both performed by the AR device DV1. In other words, the AR devices DV1 and the processing device DV2 may form (or be part of) a same device. The AR device DV1 may thus obtain or determine the physical lighting information DT4 and the virtual lighting information DT6 (S44, S46) as described earlier. In this case, the steps S8 and S48 of transmitting/receiving data and/or information can be omitted. Likewise, although encoding and decoding may still occur within the AR device DV1, the operations of encoding/decoding (S6, S42, S48, S14) can be omitted. For instance, the source video picture PR1 may be stored in a non-encoded (or not compressed) form in a local memory of the AR device DV1 and retrieved from this local storage in step S4 (**figure 5**) such that no decoding (or decompression) is necessary. For instance, the AR device DV1 may obtain (S2) the 3D information DT1, obtain (S4) the source video picture PR1, perform the relighting S15 and aggregation S19, and proceed with the rendering step S20.

Various adaptations of the methods 500 and 540 may be encompassed in the present application, some of which will be described below by way of exemplary embodiments.

As already indicated, the present application allows generation and rendering of a high-quality AR video picture by performing complex relighting of real-world elements as well as virtual elements in an aggregated video picture taking into account of physical and virtual lights affecting the AR content. It is possible in particular to make virtual objects appear as if they were visually interacting with each other, by reflecting virtual light on each other, by producing virtual shadows, etc. Physical elements can also be made as if they were exposed to virtual light emitted by a virtual light source incorporated as augmented content into the real-world scene.

Although variants are possible, partial delegation (or externalizing) of processing work to a processing device DV2 external to an AR device DV1 may be performed as described earlier, in particular for delegating the determination of the physical and/or virtual lighting information which may require significant processing and power resources. To avoid latency and ensure efficient AR content rendering, a trade-off may be reached by carrying out locally at the AR device level as much as possible of the required processing work, including the aggregation of real and virtual content as well as the two-type relighting reconstruction. While a solution may consist in having all the processing operations performed remotely by an external processing device DV2 (including aggregation and relighting), this could be detrimental to the quality of AR content rendering, notably because significant amount of data (corresponding to the aggregated video picture including relighting effects) would have to be transmitted over from the processing device DV2 to the AR device DV1, thereby requiring important bandwidth and communication resources. Besides, additional latency would be required by the additional processing. Thanks to the present application, limited amount of data is transmitted over from the processing device DV2 to the AR device DV1 since there is no need for the processing device DV2 to return data corresponding to source video picture PR1.

Exemplary implementations of the methods 500 and 504 are now described hereafter with reference to **figures 5-9.**

In an exemplary embodiment, the processing device DV2 also transmits (S48, **figure 5**), to the AR device DV1, 3D coordinates in association with the virtual and physical lighting information DT4, DT6 respectively. For instance, the 3D coordinates are provided as part of the scene description document (or file) SD1 as previously described. The AR device DV1 may determine, based on the 3D coordinates (spatialization information), spatial positions where the virtual and physical lighting information DT4, DT5 apply relative to the real-world scene. The virtual and hybrid relighting effects RL1, RL2 may thus be determined (S14, S16) based on the spatial positions of the virtual and physical lighting information DT4, DT6.

Further, as indicated earlier, the AR device DV1 may receive in the obtaining step S10 the physical lighting information DT4 and the virtual lighting information DT6 (with possibly also the environmental map data DT5 and/or DT7, if any) in various ways from the processing device DV2, for instance in a scene description document SD1, in a file, or as part of a bitstream of encoded video data. It is assumed in the following exemplary embodiments that a scene description document SD1 is used to transmit the physical and/or virtual lighting information DT4, DT6, although variants are possible where these items are transmitted within a file or as part of a bitstream BT2 of encoded video data.

In an exemplary embodiment, the processing device DV2 generates (S48, **figure 5**) a scene description document SD1 comprising at least one syntax element representative of the virtual and physical lighting information DT4, DT6 and at least one indicator (or descriptor) IT1 indicating the presence of the virtual and/or lighting information DT4, DT6 within the scene description document SD1. Examples of syntax elements will be described further below. The at least one indicator IT1 serves to signal (or define) the type of the lighting information (physical and/or virtual) carried within the scene description document SD1.

The AR device DV1 may thus detect, based on an indicator IT1 in the received scene description document SD1, that said scene description document SD1 comprises physical and/or virtual lighting information. To this end, the AR device DV1 may parse the scene description document SD1 and extract therefrom the physical and/or virtual lighting information DT4, DT6 for latter processing in the relighting step S15.

More specifically, in an exemplary embodiment, the scene description document SD1 generated by the processing device DV2 comprise first lighting information associated with a first indicator IT1 (with possibly also the environmental map data DT5, if any). The scene description document may also comprise second lighting information possibly associated with a second indicator IT2, although variants are possible where the second lighting information DT6 is obtained otherwise by the AR device DV1. The AR device DV1 may thus detect, based on the associated first indicator IT1 present in the received scene description document SD1, that the first lighting information is of the physical lighting information type, and is thus to be used (or interpreted) as physical lighting information. In other words, the first lighting information may be recognised (or interpreted), based on the first indicator IT1 in the received bitstream BT2, as physical lighting information. Likewise, the AR device DV1 may detect, based on the second indicator IT2 present in the received bitstream BT2, that the second lighting information is of the virtual lighting information type, and is thus to be used (or interpreted) as virtual lighting information. In other words, the second lighting information may be recognised (or interpreted), based on the second indicator IT2 in the received bitstream BT2, as virtual lighting information.

In this case, the AR device DV1 can thus solely rely on the information provided in the scene description document SD1 to perform the relighting process S15. This simplifies the handling from the AR application point of view and it allows creating an interoperable interface based on the scene description document SD1 with different ecosystems. This way any service providing remote lighting estimation to an AR application may be used to provide the physical and virtual relighting information DT4, DT6 via the scene description document SD1 without the need to integrate with an API.

In an exemplary embodiment, the scene description document SD1 comprises indicators which indicate additional information, such as types of physical and/or virtual light sources defined in respectively the physical and virtual lighting information DT4, DT6. For instance, the AR device DV1 may detect, based on an indicator present in the received scene description document SD1, that the physical (or virtual) lighting information defines at least a predefined type of light source (e.g., punctual light source, ambient light source, etc.).

In an exemplary embodiment, the processing device DV2 inserts, in a bitstream BT2 transmitted in S48 (**figure 5**) to the AR device DV1, the scene description document SD1 as previously described. The AR device DV1 obtains in S14 the scene description document SD1 by decoding the received bitstream BT2. The lighting information contained in the scene description document SD1 may then be processed by the AR device DV1 as already described.

In an exemplary embodiment, the virtual lighting information DT6 is not transmitted in the scene description document SD1 from the processing device DV2, so it is retrieved by any other appropriate means. The AR device DV1 may obtain the virtual lighting information DT6 independently from the received scene description document SD1, for instance via an API the AR device DV1. An API of an AR content rendering application implemented by the AR device DV1 may for instance be used to receive the virtual lighting information DT6. For example, a second scene description document comprising the virtual lighting information DT6 may be delivered to, and so received by (S10), the AR device DV1 via a Content Delivery Network (CDN) using the HTTP protocol. This scene description document SD1 may also be encapsulated into a file format structure, e.g. the ISO Base Media File Format structure, and retrieved via the HTTP protocol as well.

In an exemplary embodiment, SD1 received (S10) by the AR device DV1 from the processing device DV2 further comprises a descriptor IT3. This scene description document is for instance transmitted (S48, **figure 5**) by the processing device DV2 along with (aside) a bitstream (or data stream) BT2 which, as already described, may comprises the physical and virtual lighting information DT4, DT6 (and possibly also the environmental map data DT5, if any). In this case, the bitstream BT2 thus does not comprise the scene description document provided to the AR device DV1. The AR devices DV1 may then access, based on the descriptor IT3, the physical and virtual lighting information DT4, DT6 contained in the received bitstream BT2. In other words, the scene description document only provides means for the AR device DV1 to access the relevant data, but does not comprise the relevant data themselves.

The bitstream BT2 may be available through the use of accessors which are a generic way of describing structured data that the AR application of the AR device DV1 can access. The descriptor IT3 may describe lighting information and/or means to access lighting information contained in the bitstream BT2.

In an exemplary embodiment, the AR device DV1 obtains environmental map data DT5 and/or DT7 by decoding encoded video picture data contained in the received bitstream BT2 (S10, **figure 5**). The AR device DV1 then detects, based on at least one indicator IT1 comprised in the received bitstream BT2, that the received bitstream BT2 carries, as metadata, the virtual and physical lighting information DT4, DT6. The AR device DV1 extracts the virtual and physical lighting information DT4, DT6 from the received bitstream BT2 (obtaining step S14).

In this way, instead of declaring multiple buffers and buffer views for each parameter and type of lights (punctual, ambient, ...), it is possible to package all the relevant physical and virtual lighting information and convey it in a video bitstream BT2. This video bitstream BT2 may contain in the video data the environment map data DT5 and as metadata (possibly in SEI messages for AVC, HEVC, VVC, EVC video codec) the physical and virtual lighting information DT4, DT6.

Exemplary embodiments of the present application are now described below with examples of extended standards for scene description documents and examples of signalisation syntax for signalling the type of the relevant data transmitted by the processing device DV2 to the AR device DV1 (S48, **figure 5**). Each of these examples may be used to implement any one of the exemplary embodiments described in the present application.

Since existing scene description documents (e.g., USD, glTF, see below) do not differentiate between real and virtual light sources for an AR scene, the present application may extend any of them to express various items of lighting information (static and/or dynamic) as well associated information (indicators) indicative of the type or nature of each item, i.e., real or virtual. Based on this information, the AR device DV1 (**figure 5**) can take into account both physical and virtual lighting information DT4, DT6 for relighting the AR scene.

More specifically, 3D scenes can be complex descriptions of moving 3D objects in a virtual environment with physical properties. Several languages can be used to express those scenes into files called scene description documents. For instance, the Khronos Group® standardized the glTF (derivative short form of Graphics Language Transmission Format) specification. A glTF document may describe a 3D object as well as a whole 3D scene. This document can either be stored as a JSON document (i.e., plain text) or as a binary file according to the format defined in the glTF standard.

The Khronos extension named "KHR_lights_punctual" is an extension of the Khronos groups to glTF 2.0. This extension allows to describe source of light in a glTF scene. The lights have a punctual nature as indicated by the extension name and explained in the extension description. This extension defines three "punctual" light types: directional, point and spot. Punctual lights are defined as parameterized, infinitely small points that emit light in well-defined directions and intensities.

Against the glTF 2.0 specification, the Khronos registry for extension also contains a multi-vendor extension (by Microsoft® and Adobe®) named "EXT_lights_image_based" which allows to add environment map data as well as spherical harmonics to the scene description document.

Published under the reference ISO/IEC DIS 23090-14, MPEG-I Scene Description (SD) specifies extensions to the Khronos glTF specification. Those extensions enable the integration of MPEG media data (e.g., MPEG-DASH Media Presentation Description (MPD) for adaptive streaming content) inside the glTF format for the description of the scene. In addition, SD defines an architecture to request, access, synchronise and render the media content contained in the scene description document (i.e., the glTF scene).

Extensions to the glTF scene description document specification as well as modifications of the MPEG-I Scene Description standard (which is a standard that extends the glTF specification) are now described in exemplary embodiments of the present application.

In an exemplary embodiment, for EXT_lights_image_based, a new parameter e.g., called "nature" may be introduced to indicate the nature of the described lighting information. It could either corresponds to physical lighting information, virtual lighting information or a mixture of both. Here is an example of property table of the extension modified for this purpose (changes in yellow).

| Property | Description | Required |
|---|---|---|
| name | Name of the light. | No |
| rotation | Quaternion that represents the rotation of the IBL environment. | No, Default: [0.0, 0.0, 0.0, 1.0] |
| intensity | Brightness multiplier for environment. | No, Default: 1.0 |
| irradianceCoefficients | Declares spherical harmonic coefficients for irradiance up to l=2. This is a 9x3 array. | Yes |
| specularImages | Declares an array of the first N mips of the prefiltered cubemap. Each mip is, in turn, defined with an array of 6 images, one for each cube face. i.e. this is an Nx6 array. | Yes |
| specularImageSize | The dimension (in pixels) of the first specular mip. This is needed to determine, pre-load, the total number of mips needed. | Yes |
| nature | Indicates whether the lighting information corresponds to physical light, virtual light or both. | Yes |

Here is the example snippet (not a full glTF file but just the relevant part) that illustrates the new parameter. In this example, the parameter "nature" would indicate that the lighting information corresponds to physical lighting information.

```
"extensions": {
 "EXT_lights_image_based" : {
    "lights": [
      {
      "intensity": 1.0,
         "rotation": [0, 0, 0, 1],
         "irradianceCoefficients": [...3 x 9 array of floats...],
         "specularlmageSize": 256,
         "specularlmages": [
           [... 6 cube faces for mip 0 ...],
           [... 6 cube faces for mip 1 ...],
        ...
           [... 6 cube faces for mip n ...]

         ],
         "nature": "physical"
      }
  ]
 }
}
```

A similar extension can be envisioned for the KHR_lights_punctual with the following changes to the property table.

| Property | Description | Required |
|---|---|---|
| name | Name of the light. | No, Default: "" |
| color | RGB value for light's color in linear space. | No, Default: [1.0, 1.0, 1.0] |
| intensity | Brightness of light in. The units that this is defined in depend on the type of light. point and spot lights use luminous intensity in candela (lm/sr) while directional lights use illuminance in lux ($lm/m^2$) | No, Default: 1.0 |
| type | Declares the type of the light. | Yes |
| range | Hint defining a distance cutoff at which the light's intensity may be considered to have reached zero. Supported only for point and spot lights. Must be > 0. When undefined, range is assumed to be infinite. | No |
| nature | Indicates whether the lighting information corresponds to a physical light, a virtual light or unknown. | Yes |

It is noted that since the data structure describes a unique source of light, the hybrid case of both physical and virtual may not occur frequently and is thus omitted in the above example, although variants including the hybrid case can also be envisaged. However, the case unknown may be useful and could be signalled in case the source nature cannot be defined.

Here is the example snippet (not a full glTF file but just the relevant part) that illustrates the new parameter. In this example, the parameter "nature" indicates that the lighting information corresponds to virtual lighting information.

```
"extensions": {
 "KHR_lights_punctual" : {
    "lights": [
      { "color": [
           1.0,
           1.0,
           1.0
         "type": "directional",
         "nature": "virtual"
      }
  ]
 }
},
```

As shown in the above exemplary embodiments, it is possible to modify the existing glTF extension describing lighting information in such a way the application can differentiate the rendering process between virtual and physical lighting information. However, this information remains static for the rendering process associated to this glTF scene description document.

In an exemplary embodiment, the local lighting condition in a user's room may change over time (clouds passing by, sun rising, etc.). In those cases, one may update the scene description document when this happens. But the frequency of the update nor the granularity for small changes would incur multiple updates of the document (hundreds per second) which would cause a dramatic increase of scene document generation and the parsing by the application causing too many interruptions and power consumption. Instead, one may pass the time-dependent lighting information as a data stream to the application for which the scene description document would only provide the means to access this data stream to the application and no longer the data itself (as already described).

To this end, it is possible to define a new glTF extension which provides the lighting information data as part of a data stream. This data stream would be available through the use of accessor which are a generic way of describing structured data that an application can access. However, since the goal is to provide data that vary over time, this requires to use the existing MPEG extension called MPEG_buffer_circular which provides generic access to timed data. It is thus presented hereafter a new extension, named "MPEG_lighting_information", as part of the MPEG-I SD standard.

Definition of top-level objects of MPEG_lights_punctual extension:

| Name | Type | Default | Usage | Description |
|---|---|---|---|---|
| name | string | "" | O | Same as name in KHR_lights_punctual |
| nature | string | | M | Indicates whether the lighting information corresponds to a physical light, a virtual light or unknown. |
| color_accessor | integer | | M | Provides a reference to the accessor giving a sequence of color value as described in color of in KHR_lights_punctual. |
| intensity_accessor | integer | | O | Provides a reference to the accessor giving a sequence of intensity value as described in intensity of in KHR_lights_ punctual. In the absence of the accessor, the constant value "1.0" is assumed. |
| range_accessor | integer | | O | Provides a reference to the accessor giving a sequence of range value as described in range of in KHR_lights_punctual. In the absence of the accessor, the constant value "infinite" is assumed. |

Start of example glTF file:


```
... "extensions": {
    "MPEG_media": {
      "media": [
         {"alternatives": [
              {
                "mimeType": "application/octet-stream",
                "uri": "punctual_light_color_information.bin" }
           ],
           "loop": true,
           "name": "media_0"
         },
         {"alternatives": [
              {
                "mimeType": "application/octet-stream",
                "uri": "punctual_light_intensity_information.bin" }
           ],
           "loop": true,
           "name": "media_1"
         },
         {"alternatives": [
             {
                "mimeType": "application/octet-stream",
                "uri": "punctual_light_range_information.bin" }
           ],
           "loop": true,
           "name": "media_2" },
      ]
    },
    "MPEG_lights_punctual" : {
      "lights": [
         {
           "type": "directional",
           "nature": "virtual",
           "color_accessor": 0,
           "intensity_accessor": 1
           "range_accessor": 2
           } ] } },
```

```
"accessors": [
 { // Color info
    "componentType": 5126, // this means float
    "count": 1024,
    "extensions": {
      "MPEG_accessor_timed": {
         "bufferView": 0,
         "immutable": true,
         "suggestedUpdateRate": 25
      }
   }
   "type": "VEC3" // this means a vector of 3 components },
 {// Intensity info
    "componentType": 5126, // this means float
    "count": 1024,
    "extensions": {
      "MPEG_accessor_timed": {
         "bufferView": 1,
         "immutable": true,
         "suggestedUpdateRate": 25 }, }
   "type": "SCALAR" // this means just a scalar (i.e 1 value)
 },
 {// Range info
    "componentType": 5126, // this means float
    "count": 1024,
    "extensions": {
      "MPEG_accessor_timed": {
         "bufferView": 2,
         "immutable": true,
         "suggestedUpdateRate": 25
   },
(...)
  }
 }
}
],
 ...
End of the example gITF file
```

Alternatively the MPEG_lights_punctual may reference a present light given in the KHR_punctual_light in which case only an index of light is given as well as the accessor. In this case, the values present in the KHR_punctual_light structure are expected to be the one of the first sample in the timed data sequence. The extension would then be as follows:

| Name | Type | Default | Usage | Description |
|---|---|---|---|---|
| light | integer | | M | Index of the item in the array of the lights parameter of the KHR_lights_punctual extension |
| nature | string | | M | Indicates whether the lighting information corresponds to a physical light, a virtual light or unknown. |
| color_accessor | integer | | O | Provides a reference to the accessor giving a sequence of color value as described in color of in KHR_lights_punctual.<br>In the absence of the accessor, the value in the referenced light is considered as the constant value for the rendering duration. |

(continued)

| Name | Type | Default | Usage | Description |
|---|---|---|---|---|
| intensity_accessor | integer | | O | Provides a reference to the accessor giving a sequence of intensity value as described in intensity of KHR_lights_ punctual. In the absence of the accessor, the value in the referenced light is considered as the constant value for the rendering duration. |
| range_accessor | integer | | O | Provides a reference to the accessor giving a sequence of range value as described in range of in KHR_lights_punctual. In the absence of the accessor, the value in the referenced light is considered as the constant value for the rendering duration. |

Further, the limitations of the current AR framework and the existing Khronos extensions is that the ambient lighting is global for the entire scene while it would be desirable for greater realism that the ambient lighting information to be spatialized (as described earlier).

As a result, in an exemplary embodiment, the new MPEG_lights_image_based extension also provides spatialization information. That is, each data structure is associated to a 3D coordinate in the scene. When rendering, the AR application may take into account the distance from each light information in order to render the relighting effects. The following "position" parameter is introduced for that effect.

Extension to gITF for dynamic lighting information in video stream:

| Name | Type | Default | Usage | Description |
|---|---|---|---|---|
| light | integer | | M | Index of the item in the array of the lights parameter of the EXT_ lights_image_based extension |
| nature | string | | M | Indicates whether the lighting information corresponds to a physical light, a virtual light, both or unknown. |
| position | vector 3 | | O | Position for which the lighting information is given. In the absence of this position, the lighting information is assumed global (i.e. for the entire scene) |
| rotation_ accessor | integer | | O | Provides a reference to the accessor giving a sequence of quaternions as described in rotation of in EXT_lights_image_based. In the absence of the accessor, the value in the referenced light is considered as the constant value for the rendering duration. |
| Intensity accessor | integer | | O | Provides a reference to the accessor giving a sequence of intensity value as described in intensity of in EXT_lights_image_based. In the absence of the accessor, the value in the referenced light is considered as the constant value for the rendering duration. |
| irradiance_ accessor | integer | | M | Provides a reference to the accessor giving a sequence of irradiance coefficients as described in irradianceCoefficients of in EXT_lights_image_based. |
| specular_ image_ accessor | integer | | M | Provides a reference to the accessor giving a sequence of specular image (environment map) as described in specularImages of in EXT_lights_image_based. |

Instead of declaring multiple buffers and buffer views for each parameter and type of lights (punctual and ambient), one may package all this lighting information and store in a video bitstreams. This video bitstreams may contain in the video data the environment map and as metadata (possibly in SEI messages for AVC, HEVC, VVC, EVC video codec) all the lighting information.

In this case, the application needs to be able to determine that the presence of such video streams containing all this information. To this end, the MPEG_lights_video may be defined as follows:

| Name | Type | Default | Usage | Description |
|---|---|---|---|---|
| media | integer | | M | Index of the item in the media array of the MPEG_media that contains lighting information |

Start of example gITF file

```
  "extensions": {
     "MPEG_media": {
       "media": [ {
            "alternatives": [ {
                 "mimeType": "video/mp4", }
                 "uri": " lights_video.mp4"
            } ],
            "loop": true,
            "name": "media_0"
          }, ]
     },
     "MPEG_lights_video " : {
       "media": 0 // Indicate that the item index 0 in the media list of MPEG_media
       contains lighting information (punctual and ambient)
     }
     }, ...
 "accessors": [
  { // Specular image info
     "componentType": 5121, // this means unsigned byte (8 bits)
     "count": 1048576 // number of samples in one frame
     "extensions": {
       "MPEG_accessor_timed": {
          "bufferView": 3,
          "immutable": true,
          "suggestedUpdateRate": 25
       }
    },
    "type": "VEC3" // this means a vector of 3 components }
    ] ...
 "bufferViews": [
  {
     "buffer": 0,
     "byteLength": 32
  },
  ]
 "buffers": [
  {
     "byteLength": 15728732,
     "extensions": {
       "MPEG_buffer_circular": {
          "count": 5,
          "headerLength": 12,
          "media":0, } } }
          ],
 End of gITF file
```

For all the above examples, the MPEG media buffer may also be referenced with an URI pointing to an RTP stream. In this case, all the signalled information may come from an external sender and not from a local file which was possibly retrieved by any transmission protocol or downloaded before starting the AR rendering session.

In an exemplary embodiment, the physical and virtual lighting information DT4, DT6 (**figure 5**) may come from simple binary files, where the video bitstream BT2 possibly contains SEI messages, ISOBMFF file (e.g., mp4 file) possibly with different tracks per type of data and from external source like incoming RTP streams. In case of RTP streams, one may define new RTP payloads to store lighting information.

Further, the present application also concerns an AR device configured to perform a method 400 for AR content rendering as previously described (**figure 4**). In particular, the AR device may comprise suitable means (or units, or modules) configured to perform each step of the methods 400, according to any one of the exemplary embodiments of the present application.

The present application also concerns an AR device DV1 and a processing device DV2 configured respectively to perform the methods 500 and 540 as previously described (**figures 5-9**). In particular, the AR device DV1 and the processing device DV2 may comprise suitable means (or units, or modules) configured to perform each step of the methods 500 and 540, respectively, according to any one of the exemplary embodiments of the present application.

Particular exemplary embodiments of the AR device DV1 and processing device DV2 are described hereafter.

**Figure 10** shows an exemplary implementation of a system SY1 comprising an AR device DV1 and a processing device DV2 configured to cooperate with each other as previously described to allow AR content rendering. Reference is made in particular to the methods 500 and 540 of the different exemplary embodiments shown in **figures 5-9.**

The AR device DV1 may be or comprise, for instance, AR google, a smartphone, a computer, a tablet, a headset for rendering AR content, etc., or any other suitable device or apparatus configured to perform steps of a method for rendering AR content, in accordance with any exemplary embodiment of the present application.

The AR device DV1 may comprise a picture obtaining unit 1002 for obtaining the source video picture PR1 (e.g., from a capturing device DV3) and a video encoder 1004 for encoding the source video picture PR1 into the encoded bitstream BT1.

The AR device DV1 may also comprise a 3D information obtaining unit 1006 for obtaining the 3D information DT1 representative of at least one virtual object OB2 (e.g., by receiving said DT1 from the content server DV4 and decoding it), an AR generating unit 1008 comprising a relighting unit 1010 and an aggregator unit 1010. The relighting unit 1010 is for relighting the real-world scene defined by the source video picture PR1 and for relighting the at least one virtual object OB2 defined by the 3D information DT1 as previously described. The aggregator unit 1012 is for generating an AR video picture PR3 by aggregating the relighted real-world scene with the relighted at least one virtual object OB2 obtained by the relighting unit 1010 as previously described.

The AR device DV1 may further comprise an AR rendering unit 1014 for rendering the AR video picture PR3 generated by the AR generating unit 1008.

Still as shown in **figure 10,** the processing device DV2 may be a high-end workstation or a mobile device, an edge processing unit, a server, etc. or any other suitable device or apparatus configured to perform steps of a method for enabling AR content rendering, in accordance with any exemplary embodiment of the present application.

The processing device DV2 may comprise a video decoder 1040 for decoding the encoded bitstream BT1 received from the AR device DV1 and a lighting information unit 1042 for obtaining or determining the physical and virtual lighting information DT4, DT6 as previously described.

The capturing device DV3 is configured to capture a source video picture PR1 by means for instance of any appropriate capturing sensor. In an exemplary embodiment, the AR device DV1 and the capturing device DV3 form one and same device.

The content server DV4 may comprise storing means for obtaining/storing the 3D information DT1.

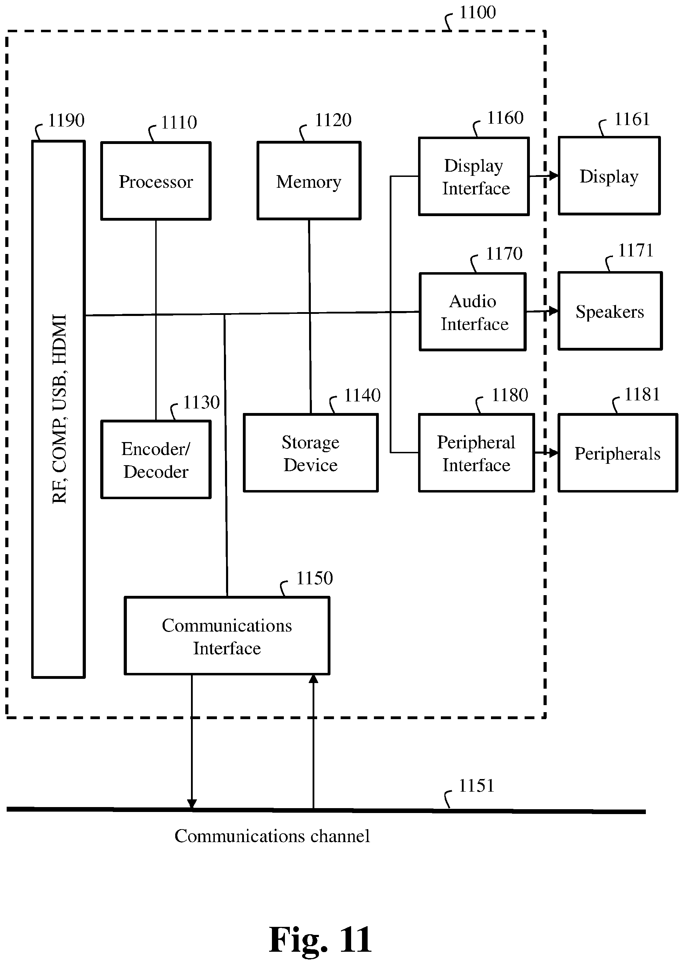

**Figure 11** shows a schematic block diagram illustrating an example of a system 1100 in which various aspects and exemplary embodiments are implemented.

System 1100 may be embedded as one or more devices including the various components described below. In various exemplary embodiments, system 1100 may be configured to implement one or more of the aspects described in the present application. For instance, the system 1100 is configured to perform either a method for rendering AR content or a method for enabling AR content rendering, according to any one of the previously described exemplary embodiments. The system 1100 may thus constitute an AR device or a processing device in the sense of the present application.

Examples of equipment that may form all or part of the system 1100 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 1100, singly or in combination, may be embodied in a single integrated circuit (IC), multiple ICs, and/or discrete components. For example, in at least one exemplary embodiment, the processing and encoder/decoder elements of system 1100 may be distributed across multiple ICs and/or discrete components. In various exemplary embodiments, system 1100 may be communicatively coupled to other similar systems, or to other electronic devices, via, for example, a communications bus or through dedicated input and/or output ports.

System 1100 may include at least one processor 1110 configured to execute instructions loaded therein for implementing, for example, the various aspects described in the present application. Processor 1110 may include embedded memory, input output interface, and various other circuitries as known in the art. System 1100 may include at least one memory 1120 (for example a volatile memory device and/or a non-volatile memory device). System 1100 may include a storage device 1140, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 1140 may include an internal storage device, an attached storage device, and/or a network accessible storage device, as non-limiting examples.

System 1100 may include an encoder/decoder module 1130 configured, for example, to process data to provide encoded/decoded video picture data, and the encoder/decoder module 1130 may include its own processor and memory. The encoder/decoder module 1130 may represent module(s) or unit(s) that may be included in a device to perform the encoding and/or decoding functions. As is known, a device may include one or both encoding and decoding modules. Additionally, encoder/decoder module 1130 may be implemented as a separate element of system 1100 or may be incorporated within processor 1110 as a combination of hardware and software as known to those skilled in the art.

Program code to be loaded onto processor 1110 or encoder/decoder 1130 to perform the various aspects described in the present application may be stored in storage device 1140 and subsequently loaded onto memory 1120 for execution by processor 1110. In accordance with various exemplary embodiments, one or more of processor 1110, memory 1120, storage device 1140, and encoder/decoder module 1130 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 1110 and/or the encoder/decoder module 1130 may be used to store instructions and to provide working memory for processing that may be performed during encoding or decoding.

In other exemplary embodiments, however, a memory external to the processing device (for example, the processing device may be either the processor 1110 or the encoder/decoder module 1130) may be used for one or more of these functions. The external memory may be the memory 1120 and/or the storage device 1140, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 1100 may be provided through various input devices as indicated in block 1190. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 1190 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 1110 as necessary. Similarly, aspects of USB or HDMI interface processing may be implemented within separate interface ICs or within processor 1110 as necessary. The demodulated, error corrected, and demultiplexed stream may be provided to various processing elements, including, for example, processor 1110, and encoder/decoder 1130 operating in combination with the memory and storage elements to process the data stream as necessary for presentation on an output device.

Various elements of system 1100 may be provided within an integrated housing. Within the integrated housing, the various elements may be interconnected and transmit data therebetween using suitable connection arrangement 1190, for example, an internal bus as known in the art, including the I2C bus, wiring, and printed circuit boards.

The system 1100 may include communication interface 1150 that enables communication with other devices via communication channel 1151. The communication interface 1150 may include, but is not limited to, a transceiver configured to transmit and to receive data over communication channel 1151. The communication interface 1150 may include, but is not limited to, a modem or network card and the communication channel 1151 may be implemented, for example, within a wired and/or a wireless medium.

Data may be streamed to system 1100, in various exemplary embodiments, using a Wi-Fi network such as IEEE 802.11. The Wi-Fi signal of these exemplary embodiments may be received over the communications channel 1151 and the communications interface 1150 which are adapted for Wi-Fi communications. The communications channel 1151 of these exemplary embodiments may be typically connected to an access point or router that provides access to outside networks including the Internet for allowing streaming applications and other over-the-top communications.

Other exemplary embodiments may provide streamed data to the system 1100 using a set-top box that delivers the data over the HDMI connection of the input block 1190.

Still other exemplary embodiments may provide streamed data to the system 1100 using the RF connection of the input block 1190.

The streamed data may be used as a way for signaling information, such as component conversion information DT1 (as described earlier), used by the system 1100. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 1100 may provide an output signal to various output devices, including a display 1161, speakers 1171, and other peripheral devices 1181. The other peripheral devices 1181 may include, in various examples of exemplary embodiments, one or more of a stand-alone DVR, a disk player, a stereo system, a lighting system, and other devices that provide a function based on the output of system 1100.

In various exemplary embodiments, control signals may be communicated between the system 1100 and the display 1161, speakers 1871, or other peripheral devices 1181 using signaling such as AV.Link (Audio/Video Link), CEC (Consumer Electronics Control), or other communications protocols that enable device-to-device control with or without user intervention.

The output devices may be communicatively coupled to system 1100 via dedicated connections through respective interfaces 1160, 1170, and 1180.

Alternatively, the output devices may be connected to system 1100 using the communications channel 1151 via the communications interface 1150. The display 1161 and speakers 1171 may be integrated in a single unit with the other components of system 1100 in an electronic device such as, for example, a television.

In various exemplary embodiments, the display interface 1160 may include a display driver, such as, for example, a timing controller (T Con) chip.

The display 1161 and speaker 1171 may alternatively be separate from one or more of the other components, for example, if the RF portion of input 1190 is part of a separate set-top box. In various exemplary embodiments in which the display 1161 and speakers 1171 may be external components, the output signal may be provided via dedicated output connections, including, for example, HDMI ports, USB ports, or COMP outputs.

In **Figures 2-9,** various methods are described herein, and each of the methods includes one or more steps or actions for achieving the described methods. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium, such as storage device 1140 (**figure 11**) for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves"

(system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 1110 or by hardware, or by a combination of hardware and software. As a non-limiting example, the exemplary embodiments may be also implemented by one or more integrated circuits. The memory 1120 may be of any type appropriate to the technical environment and may be implemented using any appropriate data storage technology, such as optical memory devices, magnetic memory devices, semiconductor-based memory devices, fixed memory, and removable memory, as non-limiting examples. The processor 1110 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present application, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to dequantizing, in one exemplary embodiment "decoding" may refer to entropy decoding, in another exemplary embodiment "decoding" may refer only to differential decoding, and in another exemplary embodiment "decoding" may refer to combinations of dequantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

**1.** A method (400; 500) for performing AR content rendering, said method comprising:

- obtaining (410; S14) virtual relighting effects (RL1) based on virtual lighting information (DT6) representative of at least one virtual light source (SC2);
- obtaining (412; S16) hybrid relighting effects (RL2) based on the virtual lighting information (DT6) and based on physical lighting information (DT4) representative of at least one physical light source (SC1); and
- generating (408; S18) an AR video picture (PR3) by aggregating a real-world scene relighted based on the virtual relighting effects (RL1) and at least one virtual object relighted based on the hybrid relighting effects (RL2) ; and
- rendering (S20) said AR video picture (PR3).

**2.** The method of claim 1, wherein said generating of an AR video picture comprises:

- obtaining (410; S14) a relighted real-world scene by applying, based on a video picture representative of the real-world scene, said virtual relighting effects (RL1);
- obtaining (412; S18) at least one relighted virtual object (OB2) by applying, based on 3-dimensional (3D) information representative of said at least one virtual object, said hybrid relighting effects (RL2); and
- aggregating the relighted real-world scene and the at least one relighted virtual object into the AR video picture.

**3.** The method of claims 1 or 2, wherein said at least one physical light source and said at least one virtual light source are defined by respectively the physical and virtual lighting information (DT4, DT6) as ambient light sources and/or as punctual light sources of any one of the following types:

- directional light sources;
- point light sources; and
- spot light sources.

**4.** The method of any one of claims 1 to 3, further comprising:

- obtaining a scene description document comprising first lighting information associated with a first indicator (IT1);
- recognising, based on the first indicator, the first lighting information as the physical lighting information (DT4); and
- obtaining the virtual lighting information (DT6) via an API of an AR content rendering application.

**5.** The method of any one of claims 1 to 3, further comprising:

- obtaining a scene description document comprising at least one of first lighting information associated with a first indicator (IT1) and second lighting information associated with a second indicator (IT2);

wherein the method further comprises at least one of:

- determining, based on the first indicator (IT1), that the first lighting information is to be used as the physical lighting information (DT4); and
- determining, based on the second indicator (IT2), that the second lighting information is to be used as the virtual lighting information (DT6).

**6.** The method of any one of claims 1 to 3, further comprising:

- obtaining a scene description document comprising a descriptor; and
- accessing, based on the descriptor, the virtual and physical lighting information (DT4, DT6) contained in a data stream.

**7.** The method of any one of claims 1 to 6, further comprising:

- detecting, based on at least one indicator (IT1, IT2) comprised in a received bitstream, that the received bitstream (BT2) carries, as metadata, said virtual and physical lighting information; and
- extracting said virtual and physical lighting information (DT4, DT6) from the received bitstream.

**8.** The method of any one of claim 1 to 7, further comprising:

- obtaining 3D coordinates in association with the virtual and physical lighting information (DT4, DT6) respectively; and
- determining, based on the 3D coordinates, spatial positions where the virtual and physical lighting information apply relative to the real-world scene;

wherein the virtual and hybrid relighting effects (RL1, RL2) are determined based on the spatial positions of the virtual and physical lighting information.

**9.** A method (540) for enabling AR content rendering, said method comprising:

- obtaining (S44) physical lighting information (DT4) representative of at least one physical light source (SC1), by performing a first lighting estimation based on a video picture (PR1) of a real-world scene;
- obtaining (S46) virtual lighting information (DT6) representative of at least one virtual light source (SC2) emitting virtual light in the real-world scene; and
- transmitting (S48) the physical and virtual lighting information for enabling AR rendering of an AR video picture (PR3).

**10.** The method of claim 9, wherein the physical and virtual lighting information (DT4, DT6) are transmitted in a scene description document for enabling AR rendering of an AR video picture (PR3),
said scene description document comprising at least one syntax element representative of the virtual and physical lighting information and at least one indicator (IT1, IT2) indicating the presence of the virtual and/or physical lighting information within the scene description document.

**11.** A scene description document (SD1), formatted to comprise at least one syntax element representative of virtual and physical lighting information (DT4, DT6) and at least one indicator (IT1, IT2) indicating the presence of virtual and/or physical lighting information within the scene description document, as obtained from the method of claim 10.

**12.** An AR apparatus (DV1) for AR content rendering, the apparatus comprising means for performing one of the methods claimed in any one of claims 1 to 8.

**13.** A processing apparatus (DV2) for enabling AR content rendering by an AR apparatus (DV2), the processing apparatus comprising means for performing the method of claims 9 or 10.

**14.** A computer program product including instructions which, when the program is executed by one or more processors, causes the one or more processors to carry out a method claimed in any one of claims 1 to 10.

**15.** A non-transitory storage medium carrying instructions of program code for executing a method claimed in any one of claims 1 to 10.

10
12
14

Fig. 1

100
110
CU
PR
140
150
160
170
180
120
135
190
DPB
130

Fig. 2

200

210
220
230
240
250
260
270
DPB

Fig. 3

400
DV1
Physical object OB1
Real shadow SH1
Physical light source SC1
PR1
Obtaining physical DT4 + virtual lighting information DT6
402
y
z
x
3D world coordinate system
Real shadow SH1
Virtual shadow SH2a
Physical object OB1
Physical light source SC1
Virtual light source SC2
DT4 + DT6
y
z
x
404
406
Relighting
PR3
Agreggation → PR2
3D information DT1 + PR1
Virtual shadow SH2c
RF1
RF2
Virtual object OB2
Virtual shadow SH2b
408
First relighting 410
Second relighting 412

Fig. 4

AR device DV1
500
OB1
OB1a SC1
OB2
OB2a SC2
PR1
Processing device DV2
540
S2
S4
Obtaining 3D information DT1
Obtaining source video picture PR1
S40
Receiving source video picture data DT2
DT1
PR1
BT1: DT2
S42
Decoding DT2 into source video picture PR1
Encoding PR1 into encoded source video picture data DT2
S6
CN2
CN1
S44
S46
S8
Transmitting encoded source video picture data DT2
Determining physical lighting information DT4 (+ environmental map data DT5)
Determining physical lighting information DT6 (+DT7)
S10
Obtaining lighting information DT4, DT6
CN1
Transmitting DT4 and DT6 (+ DT5 + IT1/IT2) / IT3 (possibly in a scene description document SD1 or bitstream BT2 of encoded video picture data)
DT4, DT6 (+DT5, DT7)
S12
Virtual relighting effects RL1
S14
S48
Hybrid relighting effects RL2
S16
S18
Aggregation of PR1 and DT1 into aggregated video picture PR2
AR video picture PR3
Rendering of AR video picture PR3
S20

**Fig. 5**

600
Physical light source SC1
602
Physical object OB1
Physical light
Real-world scene
y
x
z
3D world coordinate system

Fig. 6

+
+
=
Main
Directional Light
Ambient
Spherical Harmonics
HDR
Cubemap
Environmental
HDR

Fig. 7

OB1a
SC1
SH2a
SC2
500
SH1
S12
S14
Virtual relighting effects RL1
Hybrid relighting effects RL2
S16
PR3
SC1
SC2
OB2
SH2c
SH2b
RF1
RF2
RF
OB2a

**Fig. 8A**

500
S18
Aggregation of PR1 and DT1 into aggregated video picture PR2
OB1a
SC1
SH2a
SC2
SH1
OB2
SH2c
RF1
RF
SH2b
RF2
OB2a
PR3

Fig. 8B

PR3
SC2
RF2
PR2
OB2a
SH2b; SH2c

Fig. 9

Capturing device
DV3
SY1
DV2
PR1
DV1
AR device
Processing device
Picture obtaining unit → source video picture PR1
1002
1040
Encoded processing data DT2
Video encoder
Video decoder
BT1
1004
1006
3D information obtaining unit
CN1
DT1
AR generating unit
1008
1010
1042
Relighting unit
1012
SD1, BT2, etc.
Aggregator PR1/DT1 → PR3
Lighting information unit
DT4+DT6 (+ DT5, DT7)
PR3
AR rendering unit
1014
CN2
DV4
1050
3D information DT1
Content server
Coded 3D content

Fig. 10

1100
1190
1110
1120
1160
1161
Processor
Memory
Display Interface
Display
1170
1171
Audio Interface
Speakers
RF, COMP, USB, HDMI
1130
1140
1180
1181
Encoder/ Decoder
Storage Device
Peripheral Interface
Peripherals
1150
Communications Interface
1151
Communications channel

Fig. 11

Europäisches
Patentamt
European
Patent Office
Office européen
des brevets

# EUROPEAN SEARCH REPORT

Application Number
EP 22 30 5480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Loscos Céline ET AL: "Interactive Virtual Relighting of Real Scenes Interactive Virtual Relighting of Real Scenes", IEEE Transactions on Visualization and Computer Graphics, 1 January 2000 (2000-01-01), pages 289-305, XP055958947, Retrieved from the Internet: URL:https://hal.inria.fr/inria-00527523/document [retrieved on 2022-09-08] * abstract * * sections 3-5 * | 1-15 | INV. G06T15/50 G06T19/00 |
| A | US 2013/141434 A1 (SUGDEN BEN [US] ET AL) 6 June 2013 (2013-06-06) * abstract * * paragraphs [0034], [0035] * | 1-15 | |
| A | SEO SANGHYUN ET AL: "Real-time adaptable and coherent rendering for outdoor augmented reality", EURASIP JOURNAL ON IMAGE AND VIDEO PROCESSING, vol. 2018, no. 1, 1 December 2018 (2018-12-01), page 118, XP055959448, DOI: 10.1186/s13640-018-0357-8 Retrieved from the Internet: URL:https://jivp-eurasipjournals.springeropen.com/track/pdf/10.1186/s13640-018-0357-8.pdf> * abstract * | 1-15 | TECHNICAL FIELDS SEARCHED (IPC): G06T |

The present search report has been drawn up for all claims

2

| Place of search | Date of completion of the search | Examiner |
|---|---|---|
| Berlin | 12 September 2022 | Gao, Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 30 5480

This annex lists the patent family members relating to the patent documents cited in the above-mentioned European search report. The members are as contained in the European Patent Office EDP file on
The European Patent Office is in no way liable for these particulars which are merely given for the purpose of information.

12-09-2022

| Patent document cited in search report | Publication date | Patent family member(s) | Publication date |
|---|---|---|---|
| US 2013141434 A1 | 06-06-2013 | US 2013141434 A1 | 06-06-2013 |
| | | US 2015035832 A1 | 05-02-2015 |
| | | US 2017161939 A1 | 08-06-2017 |

EPO FORM P0459

For more details about this annex : see Official Journal of the European Patent Office, No. 12/82